# EUROPEAN PATENT APPLICATION

(11) **EP 2 273 846 A1**
(43) Date of publication of application: **12.01.2011**
(21) Application number: 08751915.3
(22) Date of filing: 22.04.2008
(51) Int. Cl.: H04W 88/08

(54) **COMMUNICATION DEVICE AND COMMUNICATION METHOD**

(71) Applicant: Fujitsu Limited, Kawasaki-shi, Kanagawa 211-8588 (JP)
(72) Inventor: MOTOHASHI, Kayo, Kawasaki-shi Kanagawa 211-8588 (JP); HASHIMOTO, Masanori, Kawasaki-shi Kanagawa 211-8588 (JP); TEZUKA, Yasuo, Kawasaki-shi Kanagawa 211-8588 (JP); MIYAZAKI, Nao, Kawasaki-shi Kanagawa 211-8588 (JP); KUNIYOSHI, Hidekazu, Kawasaki-shi Kanagawa 211-8588 (JP)
(74) Representative: Fenlon, Christine Lesley
(86) International application number: PCT/JP2008/057730
(87) International publication number: WO 2009/130758

(57) **Abstract**

Techniques are provided to make it easy to reduce the amount of packets flowing into a mobile communications network.

A mobile communications network (1) is a communications network that performs both circuit switching and packet switching. A data communications network (2) is a communications network that performs packet switching. A communication apparatus (4) is capable of connecting to the mobile communications network (1) and the data communications network (2). The communication apparatus (4) includes a communication control unit (4a) which obtains access from a mobile station (4) to the mobile communications network (1), terminates the access whose call type is packet-switched call, and replaces that access with access to the data communications network (2).

## Description

### Technical Field

The techniques discussed herein relate to a communication apparatus and a communication method, and more particularly to a communication apparatus and communication method for forwarding access from mobile stations to a mobile communications network.

### Background Art

Mobile communications systems such as cellular phone systems are widely used today. Originally the primary use of mobile communications systems was circuit-switched voice communication. In addition to providing voice communication, the mobile communications systems then evolved into the field of packet-switched data communication. The expansion of uses has greatly increased the amount of communication traffic that a mobile communications system has to handle. For this reason, there has been a need in recent years for a mobile communications system capable of processing a large amount of communication traffic in a more efficient way, as well as for the development of techniques to build and operate such a mobile communications system at lower costs.

Regarding the issues noted above, there is a technique for distributing the load of normal radio base stations and a base station controller by providing many microcells with a smaller cell radius than usual cells and deploying smaller radio base stations and a base station controller designed for those microcells (see, for example, Patent Literature 1 below). Another technique is to distribute the load of connection setup tasks by providing each radio base station with a copy of subscriber data and permitting individual radio base stations to perform authentication of mobile stations, as opposed to the usual centrally-managed authentication within the mobile communications network (see, for example, Patent Literature 2 below).

Yet another technique reduces the cost of building and operating the system facilities in the case where a mobile station can use some other communications network in addition to its attached mobile communications network. According to this technique, a base station controller discriminates between access to the mobile communications network and access to the other communications network and distributes them to appropriate networks, so that the radio base station and base station controller can serve for both the mobile communications network and the other communications network (see, for example, Patent Literature 3 below).
Patent Literature 1: Japanese Laid-open Patent Publication No. 11-164348
Patent Literature 2: Japanese Laid-open Patent Publication No. 2000-350264
Patent Literature 3: Japanese Laid-open Patent Publication No. 2003-299157

### Disclosure of the Invention

### Problems to be solved by the Invention

Mobile communications systems have been enhanced in recent years to provide a wide variety of data communication services, including those that allow the users to browse websites and view video programs over the Internet. This results in a sharp increase in the amount of packets flowing into a mobile communications network managed by a mobile communications service provider. It is thus desired for a mobile communications network to have a mechanism to regulate the inflow of packets.

One possible method to achieve the above may be to reduce data communication traffic over a mobile communications network by implementing dual access functions into mobile stations so that they can access both the mobile communications network and other communications network, as mentioned above in Patent Literature 3. In this method, however, whether the mobile communications network can control its incoming access depends on the functions implemented in individual mobile stations. Since many existing mobile stations are only capable of accessing a specific mobile communications network, it is unlikely that the above method could work effectively in controlling incoming packets.

The matter discussed below is based on the above-noted issues, and its object is to provide a communication apparatus and a communication method which make it easy to reduce the amount of packets flowing into a mobile communications network.

### Means for Solving the Problems

To solve the above problems, there is provided a communication apparatus capable of connecting to a mobile communications network which performs both circuit switching and packet switching, as well as to a data communications network which performs packet switching. This communication apparatus includes a communication control unit configured to obtain access from a mobile station to the mobile communications network, terminate the access whose call type is packet-switched call, and replace that access with access to the data communications network.

In operation of the above communication apparatus, communication control is performed to terminate access from a mobile station to the mobile communications network when its call type is packet-switched call, and that access is replaced with access to the data communications network.

Also to solve the above problems, there is provided a communication method for use by a communication apparatus capable of connecting to a mobile communications network that performs both circuit switching and packet switching, as well as to a data communications network which performs packet switching. This communication method includes obtaining access from a mobile station to the mobile communications network, terminating the access whose call type is packet-switched call, and replacing that access with access to the data communications network.

In operation of the above communication method, access from a mobile station to the mobile communications network is terminated when its call type is packet-switched call, and that access is replaced with access to the data communications network.

### Advantages of the Invention

The above communication apparatus and communication method make it easy to reduce the amount of packets flowing into a mobile communications network.

The above and other objects, features and advantages of the present invention will become apparent from the following description when taken in conjunction with the accompanying drawings which illustrate preferred embodiments of the present invention by way of example.

### Brief Description of the Drawings

FIG. 1 provides an overview of the embodiments described herein.
FIG. 2 illustrates a system configuration according to a first embodiment.
FIG. 3 illustrates functions implemented in a packet switch and an RNC according to the first embodiment.
FIG. 4 illustrates functions implemented in a radio base station according to the first embodiment.
FIG. 5 illustrates a data structure of a connection request according to the first embodiment.
FIG. 6 illustrates a flow of an initial access according to the first embodiment.
FIG. 7 further illustrates the flow of an initial access according to the first embodiment.
FIG. 8 schematically illustrates a method of generating authentication vectors according to the first embodiment.
FIG. 9 schematically illustrates a method of authenticating a user according to the first embodiment.
FIG. 10 schematically illustrates a method of concealing data according to the first embodiment.
FIG. 11 schematically illustrates a method of ensuring data integrity according to the first embodiment.
FIG. 12 is a flowchart illustrating a connection control process according to the first embodiment.
FIG. 13 illustrates a flow of voice access according to the first embodiment.
FIG. 14 illustrates a flow of packet access according to the first embodiment.
FIG. 15 illustrates a flow of voice call reception according to the first embodiment.
FIG. 16 further illustrates the flow of voice call reception according to the first embodiment.
FIG. 17 illustrates access routes according to the first embodiment.
FIG. 18 illustrates a data structure of a PS activation request according to a second embodiment.
FIG. 19 is a flowchart of a connection control process according to the second embodiment.
FIG. 20 illustrates a flow of PDN access according to the second embodiment.
FIG. 21 further illustrates the flow of PDN access according to the second embodiment.
FIG. 22 illustrates a flow of Internet access according to the second embodiment.
FIG. 23 illustrates access routes according to the second embodiment.
FIG. 24 is a flowchart illustrating a connection control process according to a third embodiment.
FIG. 25 illustrates a flow of packet access according to the third embodiment.
FIG. 26 illustrates access routes according to the third embodiment.
FIG. 27 illustrates a system configuration according to a fourth embodiment.
FIG. 28 illustrates functions implemented in an intermediate device according to the fourth embodiment.
FIG. 29 illustrates a flow of voice access according to the fourth embodiment.
FIG. 30 illustrates a flow of packet access according to the fourth embodiment.
FIG. 31 illustrates access routes according to the fourth embodiment.
FIG. 32 illustrates a flow of PDN access according to a fifth embodiment.
FIG. 33 further illustrates the flow of PDN access according to the fifth embodiment.
FIG. 34 illustrates a flow of Internet access according to the fifth embodiment.
FIG. 35 illustrates access routes according to the fifth embodiment.
FIG. 36 illustrates a flow of packet access according to the sixth embodiment.
FIG. 37 illustrates access routes according to the sixth embodiment.

### Best Mode for Carrying Out the Invention

Embodiments of the present invention will now be described in detail below with reference to the accompanying drawings.

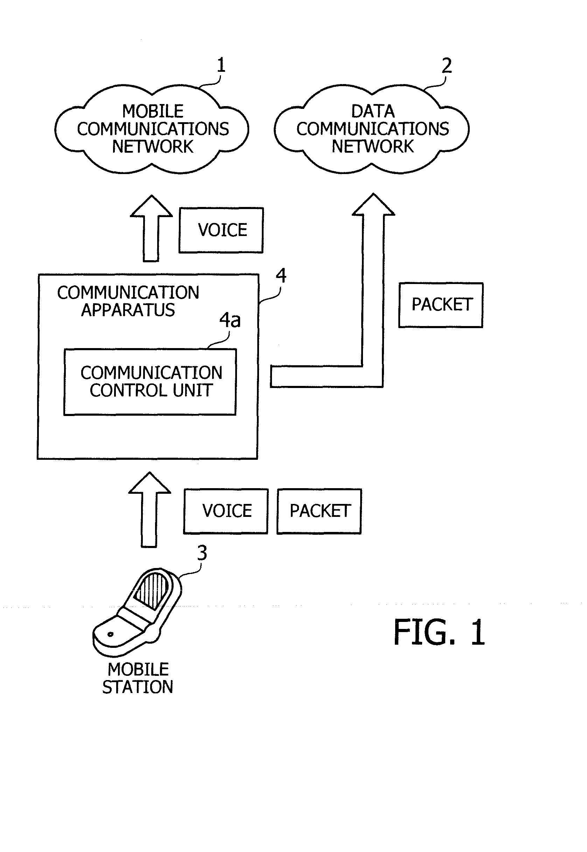

FIG. 1 provides an overview of the embodiments described herein. The communications system illustrated in FIG. 1 includes a mobile communications network 1, a data communications network 2, a mobile station 3, and a communication apparatus 4.

The mobile communications network 1 is a communications network that supports both circuit-switched (CS) communication and packet-switched (PS) communication. The mobile communications network 1 is managed by, for example, a mobile communications service provider. The data communications network 2, located outside the possible mobile communications network 1, is a communications network that supports packet-switched communication. The data communications network 2 may be, for example, the Internet. Circuit-switched communication services include voice call services and video phone services, for example. Packet-switched communication services include web page browsing services and video viewing services, for example.

The mobile station 3 is a radio communication terminal that is allowed to use communication services based on contracts with the mobile communications service provider. The mobile station 3 is, for example, a cellular phone device. To use a communication service, the mobile station 3 makes access to the mobile communications network 1. The communication apparatus 4 is a communication apparatus capable of connecting to the mobile communications network 1 and data communications network 2. The communication apparatus 4 may be, for example, an intermediate device other than radio base station or radio base station. The communication apparatus 4 is placed on an access route from the mobile station 3 to the mobile communications network 1.

The communication apparatus 4 includes a communication control unit 4a. When there is an access attempt from the mobile station 3 to the mobile communications network 1, the communication control unit 4a determines whether the access is a CS call or a PS call. For example, it is determined whether the mobile station 3 is to use a voice call service or to use a packet communication service. In the case of CS call, the communication control unit 4a simply forwards the access to the mobile communications network 1. In the case of PS call, on the other hand, the communication control unit 4a terminates the access to the mobile communications network 1 and redirects that access to the data communications network 2, as necessary.

As one specific control method, the communication control unit 4a may be configured to determine the type of call when a connection request is received from the mobile station 3 as its first access to the mobile communications network 1, and then redirect every PS call access to the data communications network 2. Another possible method is that the communication control unit 4a intercepts access from the mobile station 3 after establishment of a connection between the mobile communications network 1 and mobile station 3, and if the access in question is found to be of a specific access type, the communication control unit 4a redirects the access to the data communications network 2 while disconnecting the existing connection to the mobile communications network 1. The communication control unit 4a may also take into consideration the congestion status of the mobile communications network 1 when determining whether to redirect PS call access to the data communications network 2.

In operation of the above-described communications system, the communication apparatus 4 forwards CS call access from the mobile station 3 to the mobile communications network 1. When, on the other hand, the mobile station 3 makes PS call access to the mobile communications network 1, the communication apparatus 4 replaces that access with access to the data communications network 2 while terminating the original access to the mobile communications network 1, as necessary. These features make it possible to automatically redirect access to the data communications network 2 as necessary, even in the case where the mobile station 3 is unable to make direct access to the data communications network 2 (i.e., unable to reach the data communications network 2 without using the mobile communications network 1). The packets flowing into the mobile communications network 1 can therefore be restricted efficiently.

### [First Embodiment ]

A first embodiment will now be described in detail below with reference to the accompanying drawings.

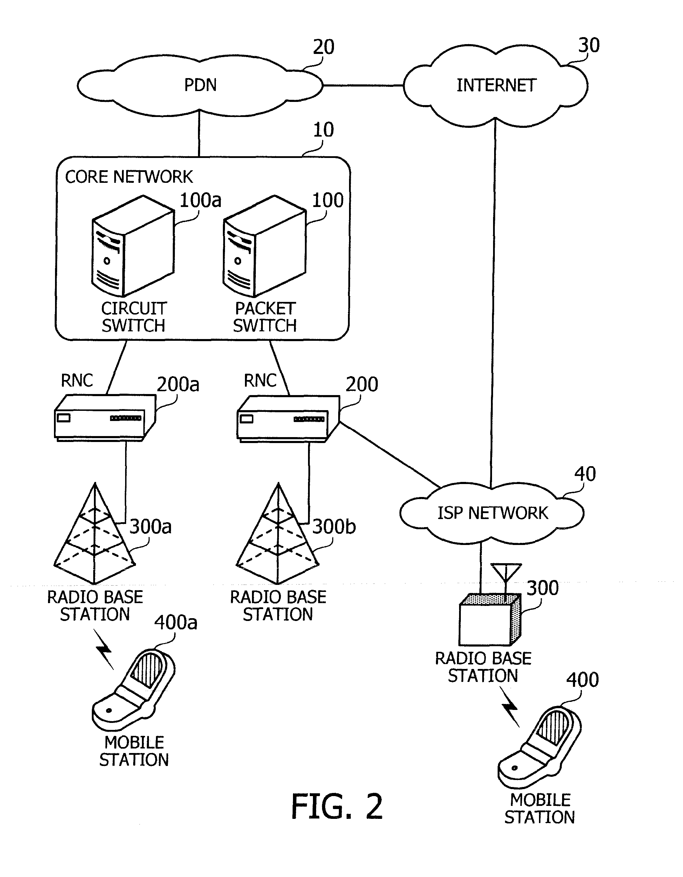

FIG. 2 illustrates a system configuration according to a first embodiment. This communications system according to the first embodiment is formed from a core network 10, a public data network (PDN) 20, the Internet 30, an Internet Services Provider (ISP) network 40, a packet switch 100, a circuit switch 100a, radio network controllers (RNCs) 200 and 200a, radio base stations 300, 300a, 300b, and mobile stations 400 and 400a.

The core network 10 is a communications network managed by a mobile communications service provider for the purpose of call control. Connected to this core network 10 are PDN 20 and RNCs 200 and 200a. The core network 10 handles CS calls and PS calls from RNCs 200 and 200a.

The PDN 20 is a data communications network managed by the mobile communications service provider. This PDN 20 is connected to the core network 10 and Internet 30. The PDN 20 uses packet communication techniques to provide mobile stations 400 and 400a with text and video content and the like. When an access attempt to Internet content is received from the core network 10, the PDN 20 forwards it to the Internet 30.

The Internet 30 is a wide area data communications network made up of a plurality of networks linked with each other. The Internet 30 is connected to the PDN 20 and ISP network 40. The Internet 30 offers packet-based communication, which makes public content on the Internet 30 available not only to the mobile stations 400 and 400a, but also to other general-purpose devices including computers. The Internet 30 may forward access from the ISP network 40 to the PDN 20 when it is directed to content on the PDN 20.

The ISP network 40 is a communications network managed by an Internet service provider. This ISP network 40 is linked to the RNC 200, radio base station 300, and Internet 30. The ISP network 40 forwards each access from the radio base station 300 to the RNC 200 or Internet 30, depending on its destination.

The packet switch 100 and circuit switch 100a are switching equipment deployed in the core network 10. The packet switch 100 handles PS calls received from RNCs 200 and 200a. For example, the packet switch 100 serves as an intermediate point of packet communication from the mobile station 400 to the PDN 20. The circuit switch 100a, on the other hand, handles CS calls received from RNCs 200 and 200a. For example, the circuit switch 100a serves as an intermediate point of voice communication from one mobile station 400 to another mobile station 400a.

The RNCs 200 and 200a are network devices deployed to control their respective subordinate radio base stations. One RNC 200 is linked to the core network 10, ISP network 40, and radio base station 300b. This RNC 200 controls communication with the core network 10 via the radio base stations 300 and 300b. The other RNC 200a is linked to the core network 10 and radio base station 300a. This RNC 200a controls communication with the core network 10 via the radio base station 300a.

The radio base stations 300, 300a, and 300b are radio network devices configured to communicate with mobile stations in their respective radio coverage areas (or cells) over radio channels. Specifically, one radio base station 300 forms a small cell (e.g., femtocell) covering a particular indoor area, whereas the other radio base stations 300a and 300b each form a macrocell. The radio base station 300 is linked to the ISP network 40. The radio base station 300a is linked to the RNC 200a. The radio base station 300b is linked to the RNC 200.

The mobile stations 400 and 400a are radio communication terminals capable of communicating with the radio base stations 300, 300a, and 300b over radio channels. The mobile stations 400 and 400a may be cellular phone devices, for example. It is assumed in the first embodiment that one mobile station 400 resides in the cell of one radio base station 300, while the other mobile station 400a resides in the cell of another radio base station 300a.

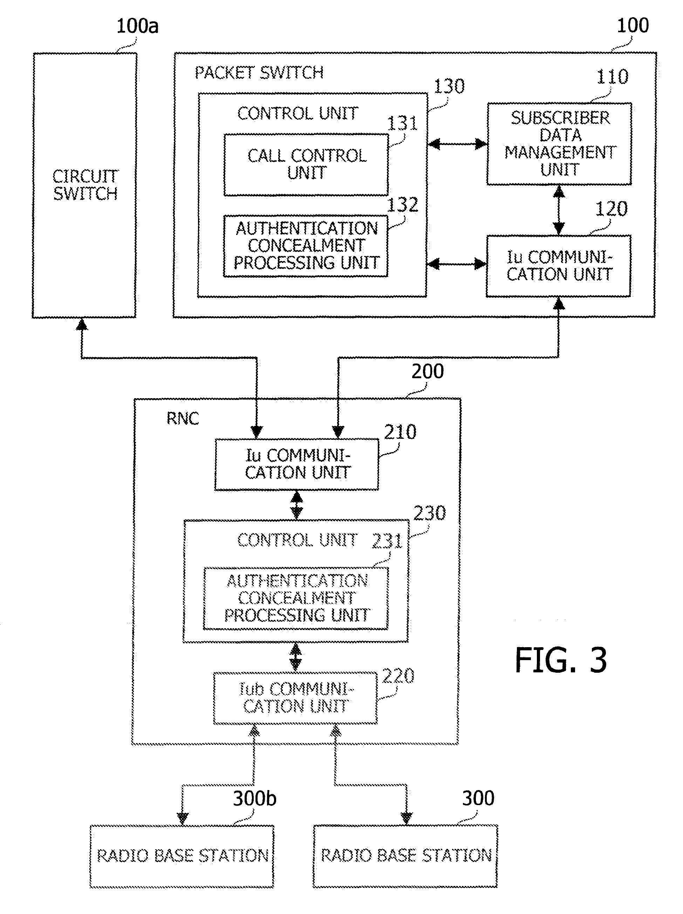

FIG. 3 illustrates functions implemented in a packet switch and an RNC according to the first embodiment. While FIG. 3 depicts modules in one RNC 200, another RNC 200a can also be realized with the same module structure as the RNC 200.

The packet switch 100 includes a subscriber data management unit 110, an Iu communication unit 120, and a control unit 130.

The subscriber data management unit 110 manages subscriber data, i.e., the information about mobile stations 400 and 400a of those who subscribe to the mobile communications network service. More specifically, the subscriber data management unit 110 retrieves and updates subscriber data by manipulating subscriber databases (not illustrated), such as Visitor Location Register (VLR) and Home Location Register (HLR), provided in the core network 10. The subscriber data includes identifiers, current locations, contract details, parameters used in authentication concealment processing, and other information concerning the mobile stations 400 and 400a.

The Iu communication unit 120 communicates with the RNCs 200a and 200.

The control unit 130 controls the overall behavior of the packet switch 100. The control unit 130 includes a call control unit 131 and an authentication concealment processing unit 132. The call control unit 131 controls PS calls in response to connection requests from the RNCs 200 and 200a. The authentication concealment processing unit 132 retrieves authentication concealment data from the subscriber data management unit 110 in response to connection requests from the mobile stations 400 and 400a and executes authentication of the requesting mobile stations 400 and 400a by using the retrieved data. The authentication concealment processing unit 132 also controls transmission of necessary authentication concealment data to the RNCs 200 and 200a.

The RNC 200 includes an Iu communication unit 210, an Iub communication unit 220, and a control unit 230.

The Iu communication unit 210 communicates with the packet switch 100 to handle PS calls. Also the Iu communication unit 210 communicates with the circuit switch 100a to handle CS calls. The Iub communication unit 220 communicates with the radio base stations 300 and 300b.

The control unit 230 controls the overall behavior of the RNC 200. The control unit 230 includes an authentication concealment processing unit 231. This authentication concealment processing unit 231 encrypts communication data that the RNC 200 exchanges with mobile stations 400 and 400a, by using authentication concealment data received from the packet switch 100. The authentication concealment processing unit 231 performs this encryption for the purpose of confidentiality of communication data (i.e., to avoid interception) and integrity of the same (i.e., to detect tampering). In addition, the authentication concealment processing unit 231 sends the radio base stations 300 and 300b some pieces of information used in its authentication concealment processing, upon request from the radio base stations 300 and 300b.

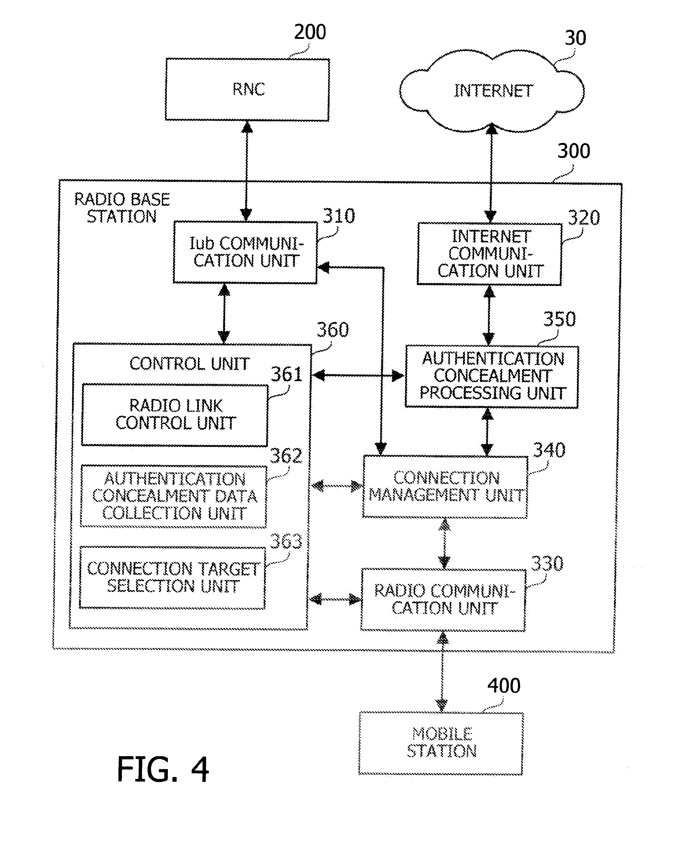

FIG. 4 illustrates functions implemented in a radio base station according to the first embodiment. The radio base station 300 includes an Iub communication unit 310, an Internet communication unit 320, a radio communication unit 330, a connection management unit 340, an authentication concealment processing unit 350, and a control unit 360. Note that the connection management unit 340, authentication concealment processing unit 350, and control unit 360 collectively serve as the communication control unit 4a discussed in FIG. 1.

The Iub communication unit 310 communicates with an RNC 200. The Internet communication unit 320 communicates with the Internet 30, while converting, as necessary, data transmission format between the Internet 30 and mobile communications network. The radio communication unit 330 communicates with a mobile station 400 over radio channels.

The connection management unit 340 examines access that the radio communication unit 330 receives from the mobile station 400, based on commands from the control unit 360, to determine whether to send it to the core network 10 or to the Internet 30. When it is determined to send the access to the core network 10, the connection management unit 340 passes its details to the Iub communication unit 310. When it is determined to send the access to the Internet 30, the connection management unit 340 passes its details to the authentication concealment processing unit 350.

The authentication concealment processing unit 350 terminates the access received from the connection management unit 340. More specifically, the authentication concealment processing unit 350 deciphers the access by using authentication concealment data received from the control unit 360 and then outputs the resulting PS call access to the Internet communication unit 320.

The control unit 360 controls the overall behavior of the radio base station 300. The control unit 360 includes a radio link control unit 361, an authentication concealment data collection unit 362, and a connection target selection unit 363. The radio link control unit 361 controls a radio link that is established between the radio communication unit 330 and mobile station 400. The authentication concealment data collection unit 362 requests the RNC 200 to provide authentication concealment data. The authentication concealment data collection unit 362 then supplies the obtained authentication concealment data to the authentication concealment processing unit 350. When a connection request arrives at the radio communication unit 330 from mobile station 400, the connection target selection unit 363 determines whether the call type is CS call or PS call, based on the received connection request. According to the determined call type, the connection target selection unit 363 specifies to which network the connection management unit 340 is to forward subsequent access from the mobile station 400.

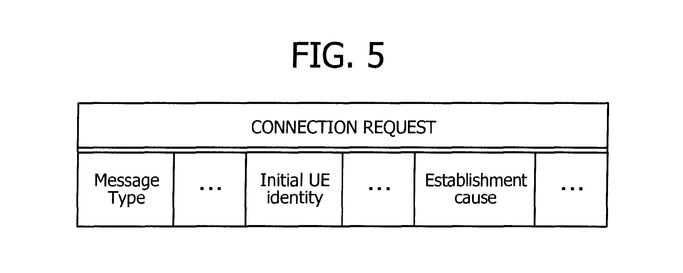

FIG. 5 illustrates a data structure of a connection request according to the first embodiment. This connection request of FIG. 5 is the first thing that the mobile station 400 sends to the radio base station 300 when initiating a voice communication session or packet communication session. The connection request includes, among others, the following data items: "Message Type," "Initial UE identity," and "Establishment cause."

"Message Type" is a predetermined bit string indicating that this message is a connection request. "Initial UE identity" is an identifier for distinguishing the sending mobile station 400 from others. "Establishment cause" is a bit string indicating the cause of this connection request. "Establishment cause" takes different values to distinguish at least voice communication from packet communication. The radio base station 300 examine this "Establishment cause" field of a received connection request to determine whether the subsequent call request from the mobile station 400 is a CS call or a PS call.

Processing operation of the communications system having the above-described functions and data structure will now be described in detail below. The description begins with an initial access that the mobile station 400 makes at its startup, and then discusses voice communication and packet communication performed by the mobile station 400.

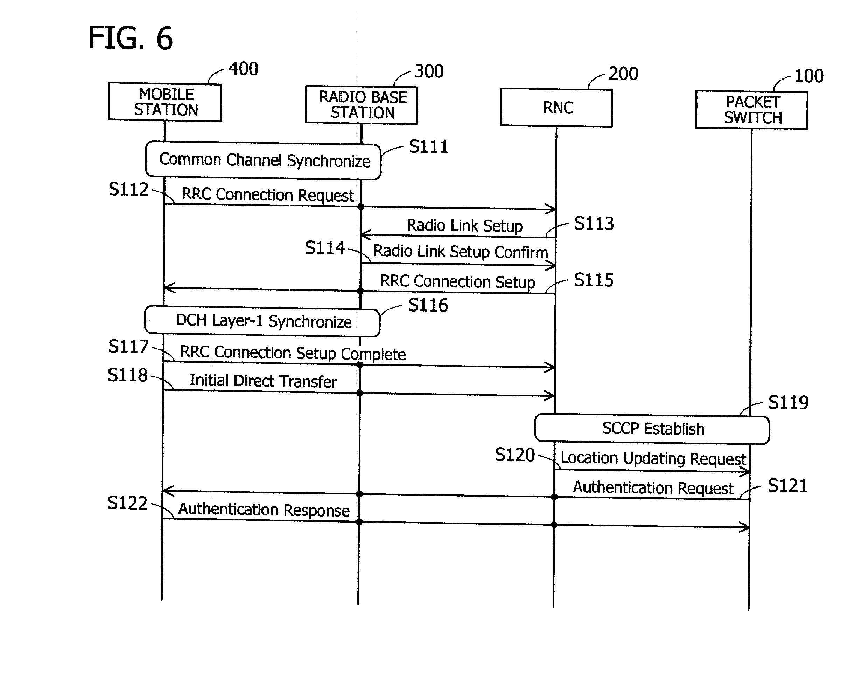

FIG. 6 illustrates a flow of an initial access according to the first embodiment. It is assumed here that the mobile station 400 makes this initial access to the radio base station 300 after power up. The following will describe the process of FIG. 6 in accordance with the step numbers.

[Step S111] (Common Channel Synchronize) The mobile station 400 and radio base station 300 synchronize their common channels.

[Step S112] (RRC Connection Request) The mobile station 400 requests the RNC 200 to establish a connection of RRC layer.

[Step S113] (Radio Link Setup) The RNC 200 requests the radio base station 300 to set up a radio link for communication with the mobile station 400.

[Step S114] (Radio Link Setup Confirm) The radio base station 300 sets up a radio link for communication with the mobile station 400 and informs the RNC 200 of completion of the link setup.

[Step S115] (RRC Connection Setup) The RNC 200 informs the mobile station 400 of establishment of an RRC connection.

[Step S116] (DCH Layer-1 Synchronize) The mobile station 400 and radio base station 300 synchronize their dedicated channels (DCH) in layer 1 (physical layer).

[Step S117] (RRC Connection Setup Complete) The mobile station 400 informs the RNC 200 that it has acknowledged the RRC connection establishment.

[Step S118] (Initial Direct Transfer) The mobile station 400 informs the RNC 200 that it starts transmission of a control signal (Location Updating Request) for registration of its location.

[Step S119] (SCCP Establish) The RNC 200 and packet switch 100 establish a Signaling Connection Control Part (SCCP) connection according to the SCCP protocol, so as to exchange their control information such as authentication concealment data.

[Step S120] (Location Updating Request) The RNC 200 requests the packet switch 100 to provide control signals for the location registration of the mobile station 400.

[Step S121] (Authentication Request) The packet switch 100 makes access to VLR and HLR (not illustrated) in the core network 10 to obtain authentication concealment data for use in the authentication processing and encryption processing. Then the packet switch 100 transmits a part of the obtained authentication concealment data to the mobile station 400.

[Step S122] (Authentication Response) Using the information received from the packet switch 100, the mobile station 400 verifies the authenticity of the packet switch 100. The mobile station 400 then produces and transmits response data back to the packet switch 100.
Using the information received from the mobile station 400, the packet switch 100 verifies the authenticity of the mobile station 400.

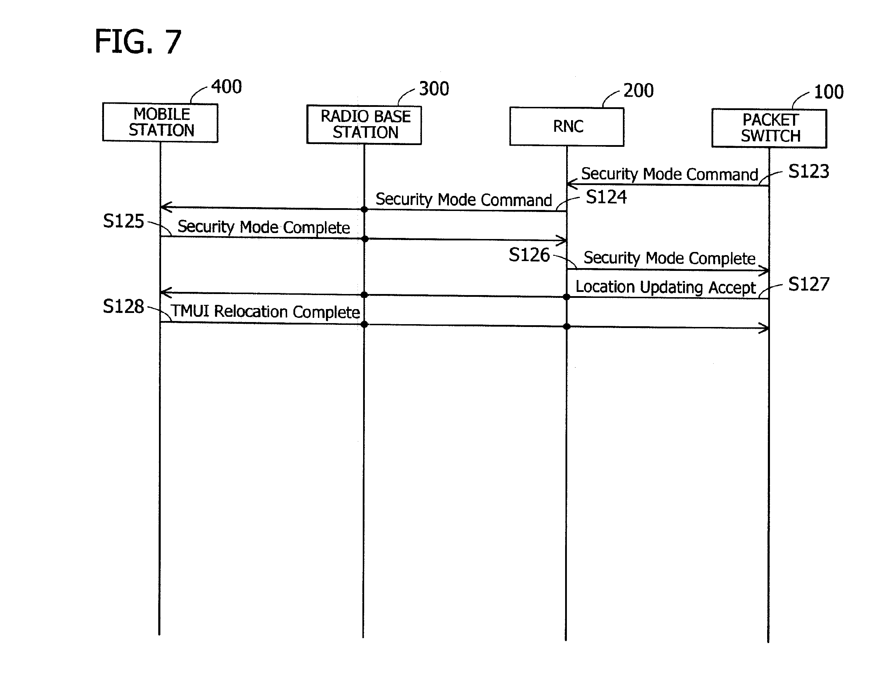

FIG. 7 further illustrates the flow of an initial access according to the first embodiment. The process of FIG. 7 is executed after that of FIG. 6. The following will describe the process of FIG. 7 in accordance with the step numbers.

[Step S123] (Security Mode Command) The packet switch 100 requests the RNC 200 to encrypt communication data for the purpose of ensuring its confidentiality and integrity.

[Step S124] (Security Mode Command) The RNC 200 commands the mobile station 400 to start to encrypt communication data, as well as sending various parameters used in the encryption.

[Step S125] (Security Mode Complete) The mobile station 400 informs the RNC 200 that it starts to encrypt communication data.

[Step S126] (Security Mode Complete) The RNC 200 notifies the packet switch 100 that the encryption of communication data has been started.

[Step S127] (Location Updating Accept) The packet switch 100 makes access to VLR (not illustrated) in the core network 10 to register the current location of the mobile station 400. After that, the packet switch 100 informs the mobile station 400 that its current location data has been updated.

[Step S128] (TMUI Relocation Complete) The mobile station 400 sends an acknowledgment to the packet switch 100 for the completion of location update.

According to the above steps, the mobile station 400 makes access to its reachable radio base station (radio base station 300) when it starts on power up. The mobile station 400 and packet switch 100 then verify each other's authenticity, and the mobile station 400 and RNC 200 start encrypting their communication data. After that, location registration takes place in the core network 10 to indicate that the mobile station 400 is visiting the cell of the radio base station 300.

The following section will now provide details of an authentication process executed between the mobile station 400 and packet switch 100 and an encryption process (data concealment and integrity assurance) executed between the mobile station 400 and RNC 200.

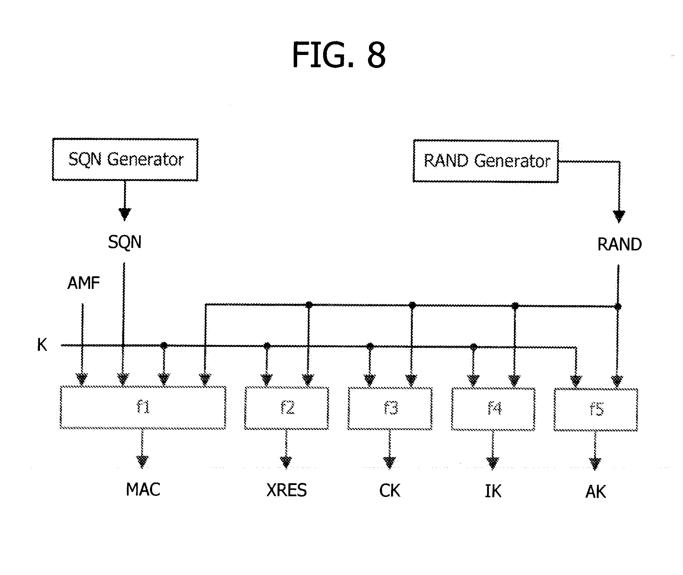

FIG. 8 schematically illustrates a method of generating authentication vectors according to the first embodiment. This method illustrated in FIG. 8 is executed on the part of the core network 10 during the first authentication process after start up of the mobile station 400. Here the operator of the core network 10 has given an authentication and key agreement management field (AMF). A private key K has also been made available for sharing between the mobile station 400 and core network 10.
Also, a sequence number (SQN) and a random challenge (RAND) are automatically produced by their respective generators at the beginning of the authentication process.

Under the above conditions in the core network 10, a message authentication code (MAC) is produced from AMF, SQN, K, and RAND based on algorithm f1. From K and RAND, the following data items are produced: That is, an expected response (XRES) message is produced based on algorithm f2. A cipher key (CK) is produced based on algorithm f3. An integrity key (IK) is produced based on algorithm f4. An anonymity key (AK) is produced based on algorithm f5.

As a result, an authentication vector <RAND, XRES, CK, IK, AUTH> is produced as authentication concealment data. AUTH is <SQN+AK, AMF, MAC>, where the symbol "+" represents the exclusive-OR operator. Of those produced parameters, RAND and AUTH are transmitted from the core network 10 to the mobile station 400 (see step S119 above).

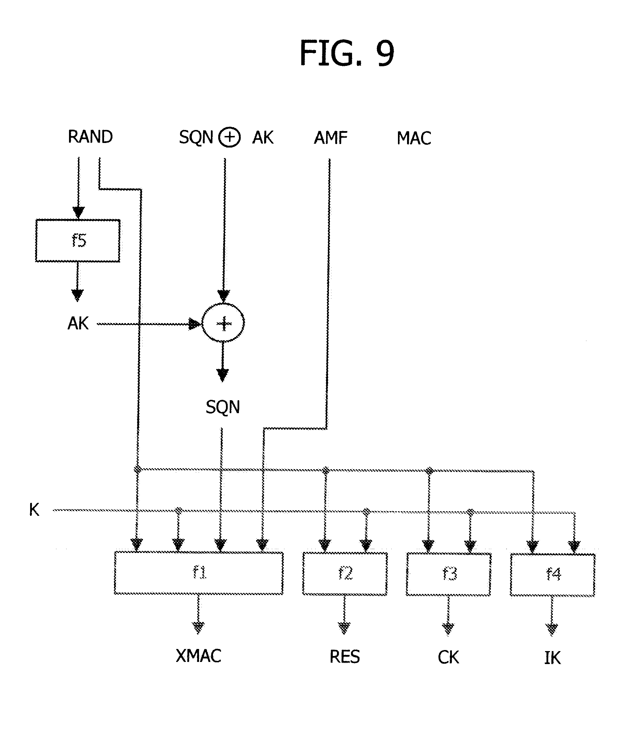

FIG. 9 schematically illustrates a method of authenticating a user according to the first embodiment. The authentication process illustrated in FIG. 9 is executed in the mobile station 400 during the first authentication process after start up of the mobile station 400. Here the mobile station 400 has a private key K at hand, which is shared with the core network 10. The mobile station 400 also receives RAND, SQN+AK, AMF, and MAC from the core network 10.

Under the above conditions, the mobile station 400 first produces AK from RAND based on algorithm f5. AK is then subjected to an exclusive-OR operation with SQN+AK, thereby obtaining SQN. An expected message authentication code (XMAC) is then produced from AMF, SQN, K, and RAND based on algorithm f1. From K and RAND, a response (RES) message is produced based on algorithm f2, a key CK is produced based on algorithm f3, and another key IK is produced based on algorithm f4.

The produced XMAC is then compared with MAC from the core network 10. Coincidence of those two values proves the authenticity of the core network 10. Afterwards, the produced RES is transmitted from the mobile station 400 to the core network 10 (see step S120 above). In the core network 10, this RES from the mobile station 400 is compared with XRES produced previously. Coincidence of those two values proves the authenticity of the mobile station 400. In this way, the mobile station 400 and core network 10 authenticate each other.

Also, as a result of the above authentication process, the mobile station 400 and core network 10 now share the two keys CK and IK. The former key CK will be used to conceal data (or to prevent interception), while the latter key IK will be used to ensure the data integrity (or to detect tampering).

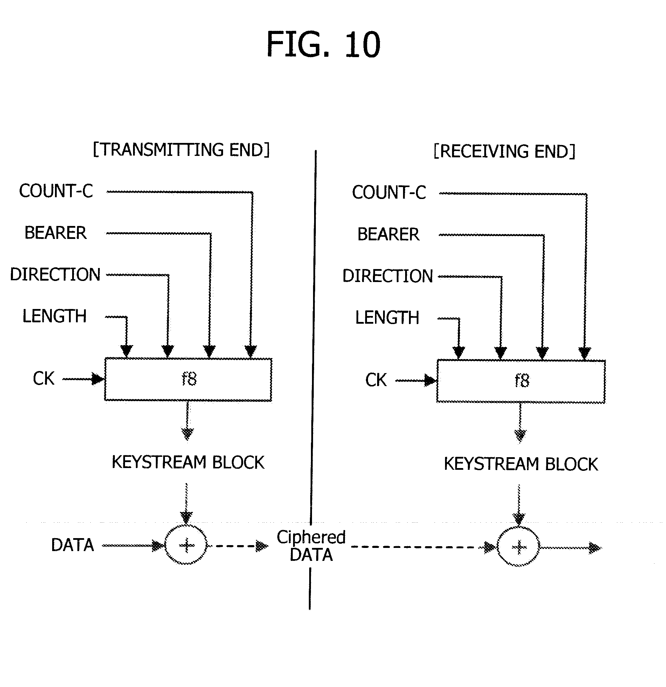

FIG. 10 schematically illustrates a method of concealing data according to the first embodiment. As seen from FIG. 10, a KEYSTREAM block is produced from COUNT-C, BEARER, DIRECTION, LENGTH, and CK, based on algorithm f8 in the data transmitting end. Transmit data is subjected to an exclusive-OR operation with the produced KEYSTREAM block. The resulting bit sequence is transmitted as ciphered data from the transmitting end to the receiving end.

COUNT-C is a 32-bit sequence number, which is incremented simultaneously in the transmitting end and receiving end. BEARER is a 5-bit identification number used to distinguish radio bearers from each other. DIRECTION is single-bit data indicating the direction of communication. LENGTH is a 16-bit numerical value indicating the size of a single block. CK is a confidential key shared by the transmitting end and the receiving end in the way discussed in FIGS. 8 and 9.

Just as in the transmitting end, a KEYSTREAM block is produced in the receiving end from COUNT-C, BEARER, DIRECTION, LENGTH, and CK based on algorithm f8. Receive data in ciphered form is subjected to an exclusive-OR operation with the produced KEYSTREAM block. The resulting bit sequence represents the original data that is sent.

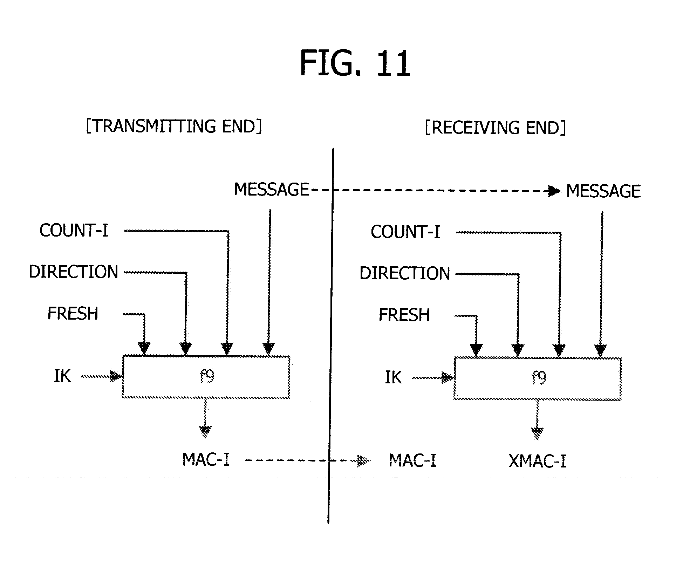

FIG. 11 schematically illustrates a method of ensuring data integrity according to the first embodiment. As can be seen from FIG. 11, MAC-I is produced from MESSAGE, COUNT-I, DIRECTION, FRESH, and IK, based on algorithm f9 in the transmitting end. MESSAGE and MAC-I are sent together from the transmitting end to the receiving end.

MESSAGE represents the contents of a message whose data integrity has to be assured. COUNT-I is a 32-bit sequence number, which is incremented simultaneously in the transmitting end and receiving end. DIRECTION is single-bit data indicating the direction of communication. FRESH is a 32-bit random bit sequence previously sent from the core network 10 to the mobile station 400. IK is an integrity key shared by the transmitting end and receiving end in the way discussed in FIGS. 8 and 9.

Just as in the transmitting end, XMAC-I is produced in the receiving end from MESSAGE, COUNT-I, DIRECTION, FRESH, and IK, based on algorithm f9. The produced XMAC-I is then compared with MAC-I received from the transmitting end. Coincidence of those two values proves the integrity of the received message.

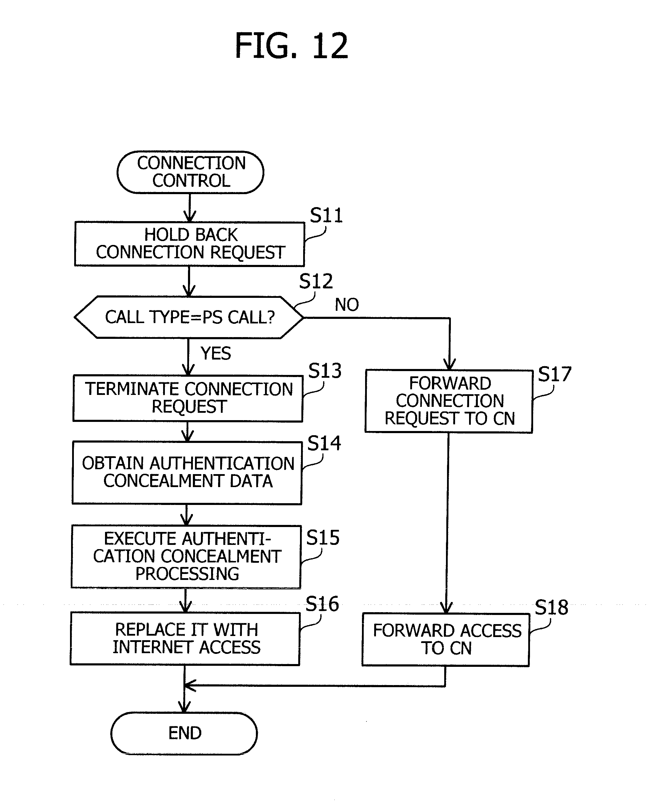

FIG. 12 is a flowchart illustrating a connection control process according to the first embodiment. This process is executed at the radio base station 300. The following will describe the process of FIG. 12 in accordance with the step numbers.

[Step S11] The radio communication unit 330 receives a connection request from a mobile station 400. The connection target selection unit 363 holds back this connection request from going to the RNC 200.

[Step S12] Based on the connection request received at step S11, the connection target selection unit 363 determines which type of call (CS call or PS call) the mobile station 400 is requesting. When the call type is determined to be PS call, the process advances to step S13. When the call type is determined to be CS, the process proceeds to step S17.

[Step S13] The connection management unit 340 terminates the connection request received at step S11, without forwarding it to the RNC 200.

[Step S14] The authentication concealment data collection unit 362 obtains authentication concealment data from the RNC 200 via the Iub communication unit 310.

[Step S15] The authentication concealment processing unit 350 receives from the authentication concealment data collection unit 362 the authentication concealment data that it obtained at step S14. Using this authentication concealment data, the authentication concealment processing unit 350 starts encryption processing, besides authenticating the mobile station 400.

[Step S16] The radio communication unit 330 subsequently receives access (PDN access or Internet access) from the mobile station 400. The connection management unit 340 outputs this access to the authentication concealment processing unit 350. The authentication concealment processing unit 350 deciphers the access, thus replacing it with access to the Internet 30.

[Step S17] The connection target selection unit 363 releases the connection request received and held back at step S11, thus allowing its transfer. Accordingly, the connection management unit 340 outputs the connection request to the Iub communication unit 310 on the core network (CN) side.

[Step S18] The radio communication unit 330 subsequently receives access (voice access) from the mobile station 400. The connection management unit 340 outputs that access to the Iub communication unit 310 on the core network (CN) side.

According to the above steps, the radio base station 300 determines call type upon receipt of a connection request from the mobile station 400. When the call type is CS call, the radio base station 300 forwards subsequent access from the mobile station 400 to the core network 10. When the call type is PS call, the radio base station 300 terminates subsequent access from the mobile station 400, thus replacing it with access to the Internet 30.

The following section will now describe a flow of messages when the mobile station 400 initiates a CS call session (voice access) and a PS call session (PDN access and Internet access).

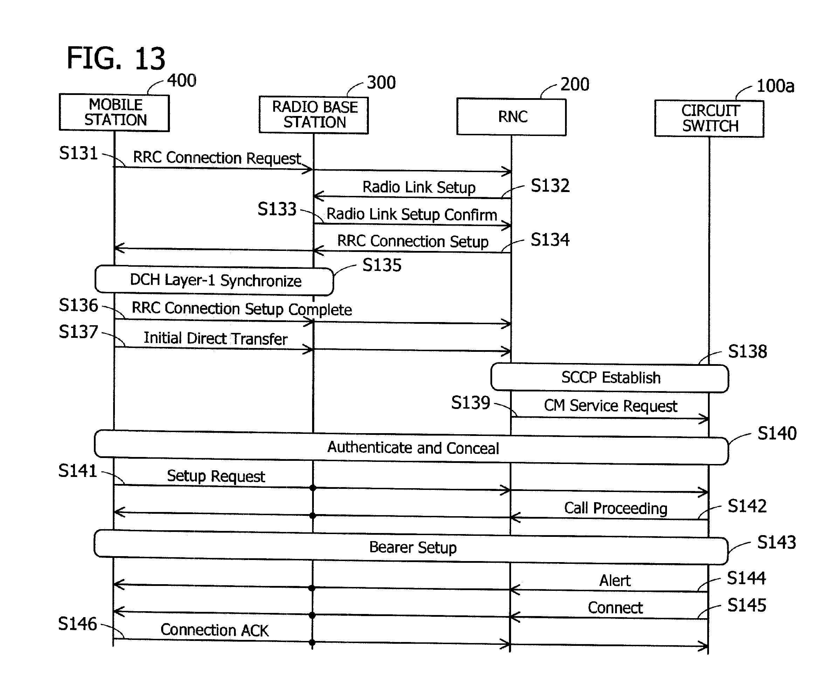

FIG. 13 illustrates a flow of voice access according to the first embodiment. It is assumed here that one mobile station 400 makes a voice call to another mobile station 400a. The following will describe the process of FIG. 13 in accordance with the step numbers.

[Step S131] (RRC Connection Request) The mobile station 400 transmits a connection request of RRC layer to the RNC 200. During this course, the radio base station 300 intercepts the connection request, determines its call type as being CS call, and thus forwards the connection request to the RNC 200.

[Step S132] (Radio Link Setup) The RNC 200 requests the radio base station 300 to set up a radio link for voice communication with the mobile station 400.

[Step S133] (Radio Link Setup Confirm) The radio base station 300 sets up a radio link for voice communication with the mobile station 400 and informs the RNC 200 of completion of the link setup.

[Step S134] (RRC Connection Setup) The RNC 200 informs the mobile station 400 of establishment of an RRC connection.

[Step S135] (DCH Layer-1 Synchronize) The mobile station 400 and radio base station 300 synchronize their dedicated channels in layer 1 (physical layer).

[Step S136] (RRC Connection Setup Complete) The mobile station 400 informs the RNC 200 that it has confirmed the RRC connection establishment.

[Step S137] (Initial Direct Transfer) The mobile station 400 informs the RNC 200 that it starts transmission of a control signal (CM Service Request) for call connection.

[Step S138] (SCCP Establish) The RNC 200 and circuit switch 100a establish an SCCP connection according to the SCCP protocol, so as to exchange their control information such as authentication concealment data.

[Step S139] (CM Service Request) The RNC 200 requests the circuit switch 100a to provide a control signal for call connection.

[Step S140] (Authenticate and Conceal) The mobile station 400 and circuit switch 100a authenticate each other. Also, the mobile station 400 and RNC 200 start encryption processing so as to ensure the confidentiality and integrity of their communication data.

[Step S141] (Setup Request) The mobile station 400 sends a CS call to the circuit switch 100a by using the established RRC connection.

[Step S142] (Call Proceeding) The circuit switch 100a informs the mobile station 400 of acceptance of the CS call.

[Step S143] (Bearer Setup) The mobile station 400 and circuit switch 100a set up a bearer (logical signal transmission channel) for their voice communication.

[Step S144] (Alert) The circuit switch 100a informs the mobile station 400 that it has started paging the callee mobile station 400a.

[Step S145] (Connect) The circuit switch 100a informs the mobile station 400 that the callee mobile station 400a has accepted its CS call (i.e., has responded to the page).

[Step S146] (Connection ACK) The mobile station 400 informs the circuit switch 100a that it has confirmed the establishment of a call connection.

According to the above steps, the radio base station 300 intercepts a connection request from the mobile station 400 to determine its call type. If the call type is found to be CS call, the radio base station 300 relays subsequent voice access from the mobile station 400 to the core network 10. At that time, the radio base station 300 does not have to intercept the access data.

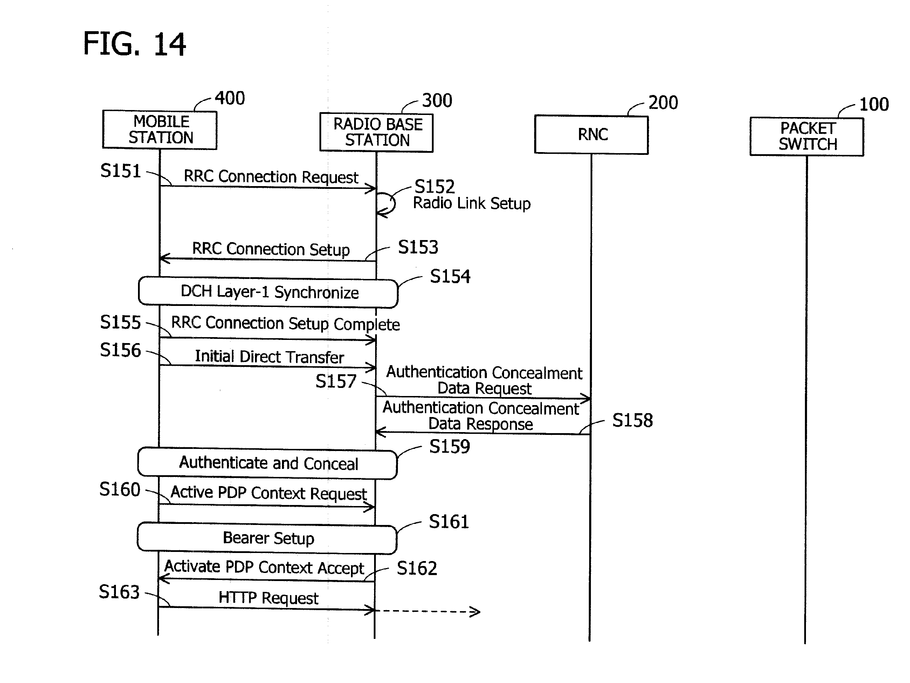

FIG. 14 illustrates a flow of packet access according to the first embodiment. It is assumed here that a mobile station 400 is attempting access to some content on the PDN 20 or Internet 30. The following will describe the process of FIG. 14 in accordance with the step numbers.

[Step S151] (RRC Connection Request) The mobile station 400 transmits a connection request of RRC layer to the RNC 200. During this course, the radio base station 300 intercepts the connection request, determines its call type as being PS call, and thus terminates the connection request, instead of forwarding it to the RNC 200.

[Step S152] (Radio Link Setup) The radio base station 300 sets up a radio link for packet communication with the mobile station 400.

[Step S153] (RRC Connection Setup) The radio base station 300 informs the mobile station 400 of establishment of an RRC connection.

[Step S154] (DCH Layer-1 Synchronize) The mobile station 400 and radio base station 300 synchronize their dedicated channels in layer 1 (physical layer).

[Step S155] (RRC Connection Setup Complete) The mobile station 400 informs the RNC 200 that it has confirmed the RRC connection establishment. The radio base station 300, however, terminates this message, instead of forwarding it to the RNC 200.

[Step S156] (Initial Direct Transfer) The mobile station 400 informs the RNC 200 that it starts transmission of a control signal (Service Request) for call connection. The radio base station 300, however, terminates this message, instead of forwarding it to the RNC 200.

[Step S157] (Authentication Concealment Data Request) The radio base station 300 requests the RNC 200 to provide authentication concealment data for use in its authentication processing and encryption processing.

[Step S158] (Authentication Concealment Data Response) The RNC 200 transmits authentication concealment data back to the radio base station 300. It is noted that the RNC 200 may not have valid authentication concealment data at hand for the mobile station 400. In that case, the RNC 200 consults the core network 10 to obtain the relevant authentication concealment data.

[Step S159] (Authenticate and Conceal) The mobile station 400 and radio base station 300 authenticate each other by using the authentication concealment data obtained at step S158. Also, the mobile station 400 and radio base station 300 start encryption processing so as to ensure the confidentiality and integrity of their communication data.

[Step S160] (Activate PDP Context Request) The mobile station 400 sends an activation request for packet communication to the RNC 200. The radio base station 300, however, terminates this message, instead of forwarding it to the RNC 200.

[Step S161] (Bearer Setup) The mobile station 400 and radio base station 300 set up a bearer (logical signal transmission channel) for their packet communication.

[Step S162] (Activate PDP Context Accept) The radio base station 300 informs the mobile station 400 that packet communication has been activated.

[Step S163] (HTTP Request) The mobile station 400 transmits a Hypertext Transfer Protocol (HTTP) request by using the established call connection. The radio base station 300 deciphers this HTTP request from the mobile station 400 and sends the resulting HTTP request to the Internet 30.

According to the above steps, the radio base station 300 intercepts a connection request from the mobile station 400 to determine its call type. If the call type is found to be PS call, the radio base station 300 obtains authentication concealment data from the RNC 200 and executes authentication concealment processing with the mobile station 400, taking the place of the RNC 200. The radio base station 300 then terminates subsequent HTTP requests from the mobile station 400 and replaces them with HTTP requests for the Internet 30.

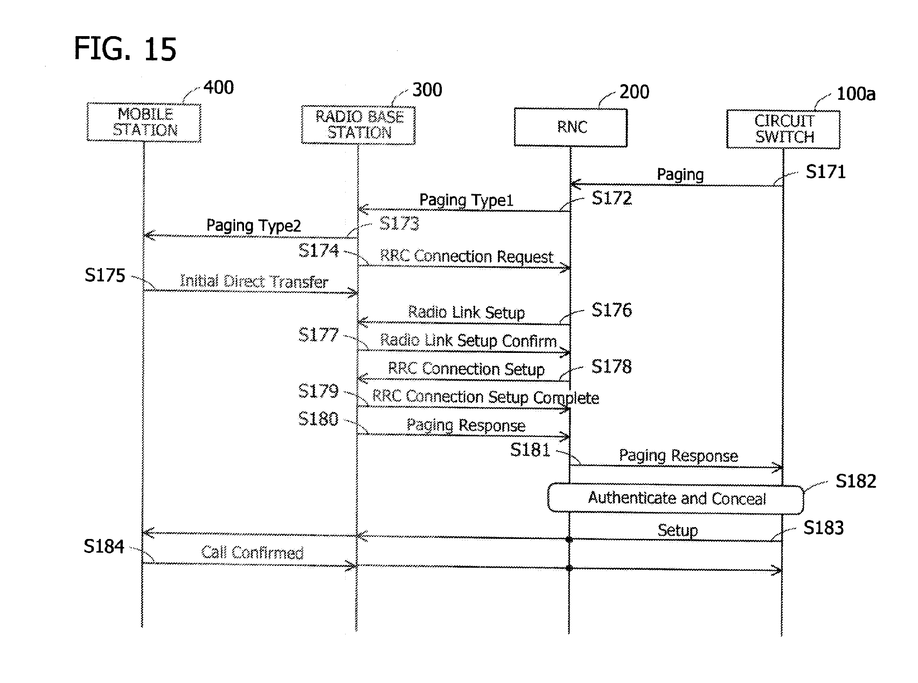

FIG. 15 illustrates a flow of voice call reception according to the first embodiment. It is assumed here that the mobile station 400 and radio base station 300 have established a PS call connection, and another mobile station 400a then calls up the mobile station 400. That is, the process of FIG. 15 is executed after the process of FIG. 14. The following will describe the process of FIG. 15 in accordance with the step numbers.

[Step S171] (Paging) The circuit switch 100a requests the RNC 200 to page the mobile station 400.

[Step S172] (Paging Type1) The RNC 200 requests the radio base station 300 to page the mobile station 400.

[Step S173] (Paging Type2) The radio base station 300 requests the mobile station 400 to add a CS call connection while maintaining the existing PS call connection.

[Step S174] (RRC Connection Request) The radio base station 300 transmits a new connection request of RRC layer to the RNC 200.

[Step S175] (Initial Direct Transfer) In response to the paging request at step S173, the mobile station 400 returns a response message of layer 3 (network layer) to the RNC 200. The radio base station 300, however, terminates this message, instead of forwarding it to the RNC 200.

[Step S176] (Radio Link Setup) The RNC 200 requests the radio base station 300 to set up a radio link for voice communication with the mobile station 400.

[Step S177] (Radio Link Setup Confirm) The radio base station 300 sets up a radio link for voice communication with the mobile station 400 and informs the RNC 200 of completion of the link setup.

[Step S178] (RRC Connection Setup) The RNC 200 informs the radio base station 300 of establishment of an RRC connection.

[Step S179] (RRC Connection Setup Complete) The radio base station 300 informs the RNC 200 that it has confirmed the RRC connection establishment.

[Step S180] (Paging Response) In response to the paging request at step S172, the radio base station 300 returns a response message of layer 3 (network layer) to the RNC 200.

[Step S181] (Paging Response) In response to the paging request at step S171, the RNC 200 returns a response message of layer 3 (network layer) to the circuit switch 100a.

[Step S182] (Authenticate and Conceal) The RNC 200 and circuit switch 100a authenticate each other.

[Step S183] (Setup) The circuit switch 100a informs the mobile station 400 of reception of a CS call.

[Step S184] (Call Confirm) The mobile station 400 informs the circuit switch 100a that it has confirmed the reception of the CS call.

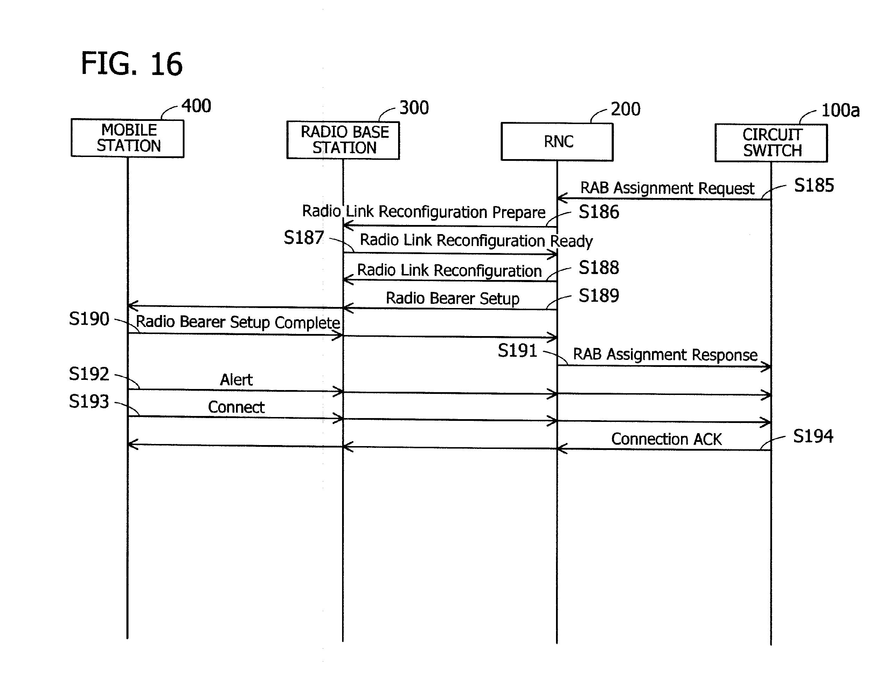

FIG. 16 further illustrates the flow of voice call reception according to the first embodiment. The process of FIG. 16 is executed after that of FIG. 15. The following will describe the process of FIG. 16 in accordance with the step numbers.

[Step S185] (RAB Assignment Request) The circuit switch 100a requests the RNC 200 to set up a bearer (logical signal transmission channel) for radio communication of the mobile station 400.

[Step S186] (Radio Link Reconfiguration Prepare) The RNC 200 commands the radio base station 300 to prepare for reconfiguration of radio links (i.e., for changing the setup of radio links to add a new CS call).

[Step S187] (Radio Link Reconfiguration Ready) The radio base station 300 informs the RNC 200 of its readiness for reconfiguration of radio links.

[Step S188] (Radio Link Reconfiguration) The RNC 200 commands the radio base station 300 to execute the reconfiguration of radio links.

[Step S189] (Radio Bearer Setup) The RNC 200 requests the mobile station 400 to set up a bearer (logical signal transmission channel) in the radio section.

[Step S190] (Radio Bearer Setup Complete) The mobile station 400 sets up a radio bearer and informs the RNC 200 of completion of the setup.

[Step S191] (RAB Assignment Response) The RNC 200 informs the circuit switch 100a that a bearer has been set up for radio communication of the mobile station 400.

[Step S192] (Alert) The mobile station 400 informs the circuit switch 100a that it is waiting for the CS call to be accepted (i.e., it is ringing).

[Step S193] (Connect) The mobile station 400 informs the circuit switch 100a that the CS call has been accepted (i.e., the callee has responded to the ringing).

[Step S194] (Connection ACK) The circuit switch 100a informs the mobile station 400 that it has confirmed the establishment of a call connection.

According to the above steps, the radio base station 300 requests the mobile station 400 to add a CS call when an incoming voice call arrives while the mobile station 400 is engaged in PDN access or Internet access. At the same time, the radio base station 300 requests the core network 10 to set up a new call connection since there is no existing call connection for the purpose. Then the radio base station 300 relays subsequent voice access from the core network 10 to the mobile station 400.

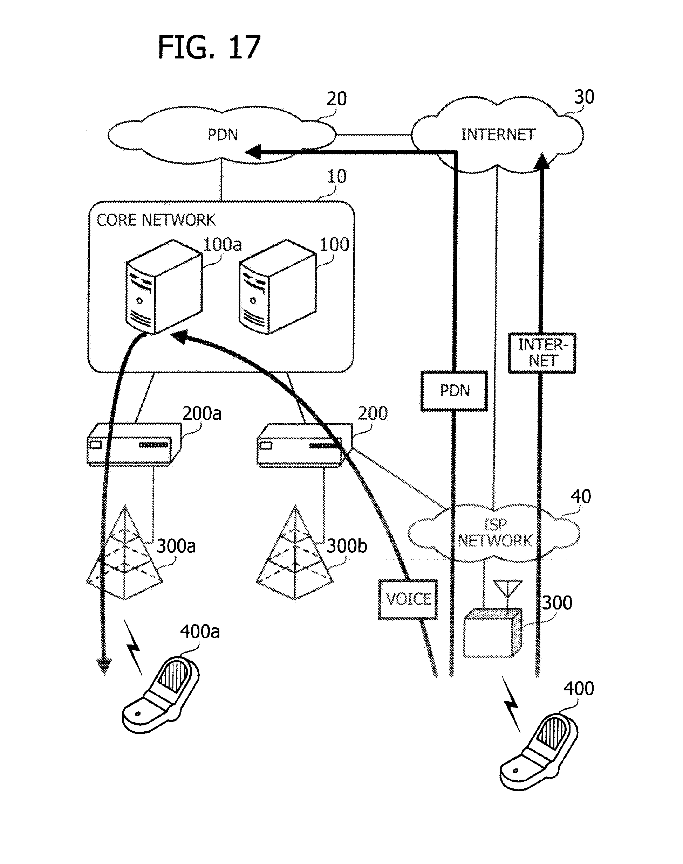

FIG. 17 illustrates access routes according to the first embodiment. As can be seen from FIG. 17, the radio base station 300 forwards voice access from a mobile station 400 to the core network 10 of the mobile communications service provider. The radio base station 300, on the other hand, terminates access from the mobile station 400 when it is PDN access or Internet access, and outputs it to the Internet 30. PDN access is further forwarded from the Internet 30 to the PDN 20.

In whichever case, the mobile station 400 has only to make access according to the protocols specified by the mobile communications service provider. In other words, it appears to the mobile station 400 that every access makes its way to the core network 10. Actually, however, PDN access and Internet access (PS call access) are automatically redirected to the Internet 30 by the radio base station 300. These features make it possible to control the flow of packets into the core network 10 more efficiently, without the need for modifying the mobile station 400.

### [Second Embodiment]

A second embodiment will now be described in detail below with reference to the accompanying drawings. The description will focus on its difference from the foregoing first embodiment, not repeating explanations for similar features. The second embodiment is configured to route PDN access to PDN via the core network, while allowing Internet access to reach the Internet without passing through the core network.

The system configuration of the second embodiment is similar to that of the first embodiment discussed in FIG. 2. Radio base stations according to the second embodiment can be realized with the same arrangement of modules as discussed in FIG. 4 for the radio base station 300 according to first embodiment, except that the connection target selection unit 363 applies a different connection control method. The following section will describe the second embodiment, using the same reference numerals used in the first embodiment.

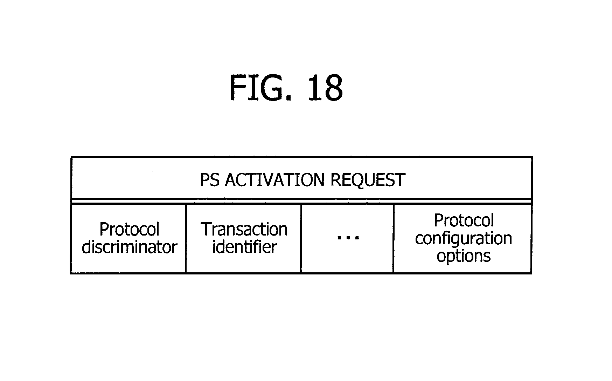

FIG. 18 illustrates a data structure of a PS activation request according to the second embodiment. The PS activation request illustrated in FIG. 18 is what a mobile station 400 transmits to the packet switch 100 to perform packet communication after establishment of an RRC connection between the mobile station 400 and core network 10. Specifically, the PS activation request contains, among others, "Protocol discriminator," "Transaction identifier," and "Protocol configuration options."

"Protocol discriminator" is an identifier that indicates which communication protocol is used in packet communication between the mobile station 400 and core network 10. "Transaction identifier" is an identifier that identifies the current transaction of communication. "Protocol configuration options" are option data values relating to the communication protocol used in an external network such as the Internet 30 in the case where the packet communication involves access such an external network. By examining those protocol configuration options contained in the PS activation request, the radio base station 300 determines whether the access type is PDN access or Internet access.

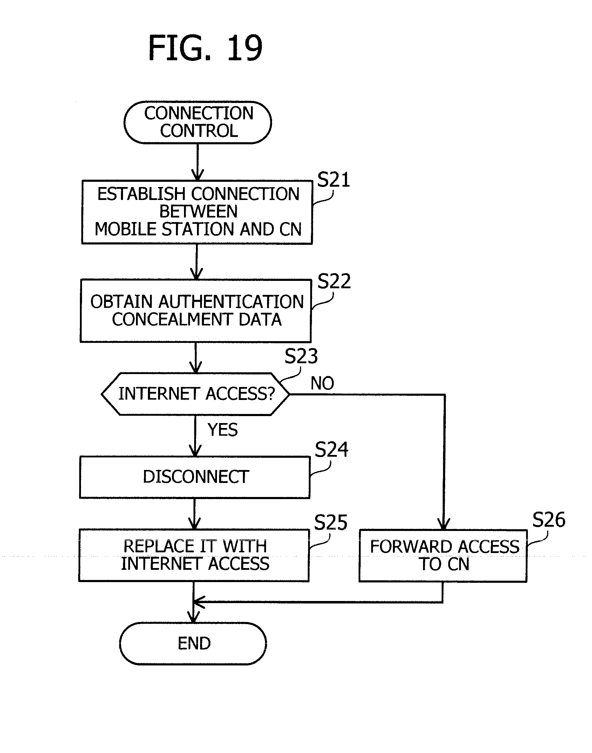

FIG. 19 is a flowchart of a connection control process according to the second embodiment. This process is executed at the radio base station 300. The following will describe the process of FIG. 19 in accordance with the step numbers.

[Step S21] The radio communication unit 330 receives a connection request from a mobile station 400. The connection management unit 340 outputs this connection request to the Iub communication unit 310 on the core network (CN) side. Then the connection management unit 340 relays control signals between the radio communication unit 330 and Iub communication unit 310, thus permitting the mobile station 400 and RNC 200 to establish an RRC connection between them.

[Step S22] The authentication concealment data collection unit 362 obtains authentication concealment data from the RNC 200 via the Iub communication unit 310.

[Step S23] When a PS activation request is received from the mobile station 400, the connection target selection unit 363 holds back this PS activation request from going to the RNC 200. The connection target selection unit 363 then intercepts the PS activation request by using the authentication concealment data obtained at step S22 and determines whether its access type is PDN access or Internet access. If the access type in question is determined to be Internet access, the process advances to step S24. If the access type is determined to be PDN access, the process proceeds to step S26.

[Step S24] The connection management unit 340 terminates the received PS activation request, without forwarding it to the RNC 200. The connection management unit 340 then disconnects the RRC connection between the RNC 200 and radio base station 300.

[Step S25] The radio communication unit 330 subsequently receives access (Internet access) from the mobile station 400. The connection management unit 340 outputs this access to the authentication concealment processing unit 350. The authentication concealment processing unit 350 deciphers the access, thus replacing it with access to the Internet 30.

[Step S26] The radio communication unit 330 subsequently receives access (voice access or PDN access) from the mobile station 400. The connection management unit 340 outputs such access to the Iub communication unit 310 on the core network (CN) side.

According to the above steps, the radio base station 300 determines access type of a PS activation request from the mobile station 400 when it is received after establishment of an RRC connection between the RNC 200 and mobile station 400. When the access type is PDN access, the radio base station 300 forwards subsequent access from the mobile station 400 to the core network 10. When the access type is Internet access, the radio base station 300 terminates subsequent access from the mobile station 400, thus replacing it with access to the Internet 30.

The following section will now describe a flow of messages when a mobile station 400 makes PDN access and Internet access. Note that message flow in the case of voice access is similar to the one discussed in FIG. 13 for the first embodiment.

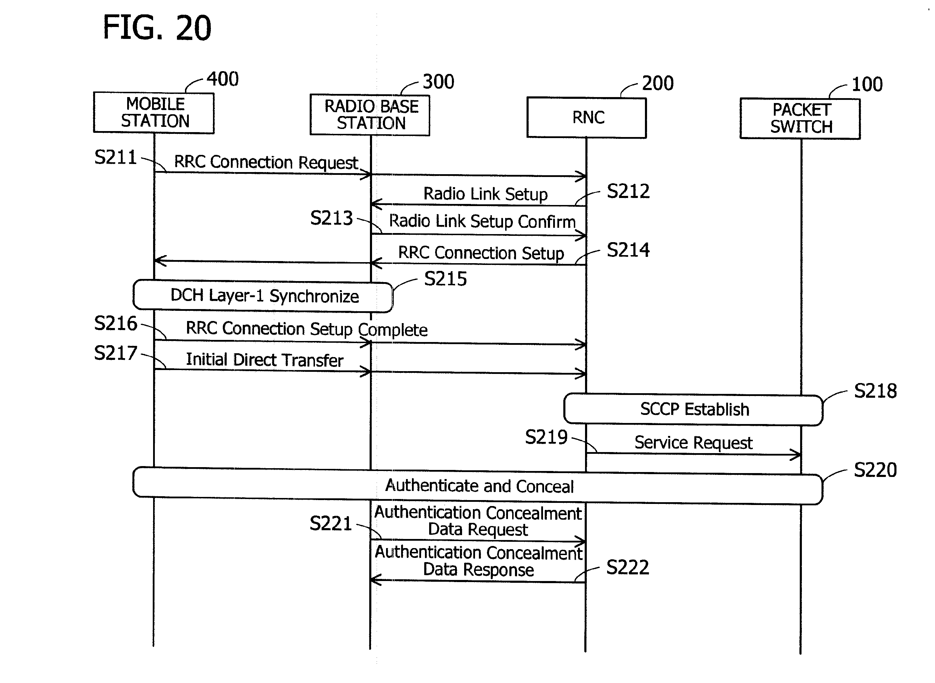

FIG. 20 illustrates a flow of PDN access according to the second embodiment. It is assumed here that a mobile station 400 is attempting access to some content on the PDN 20. The following will describe the process of FIG. 20 in accordance with the step numbers.

[Step S211] (RRC Connection Request) The mobile station 400 transmits a connection request of RRC layer to the RNC 200. During this course, the radio base station 300 does not intercept the connection request, but simply forwards it to the RNC 200.

[Step S212] (Radio Link Setup) The RNC 200 requests the radio base station 300 to set up a radio link for packet communication with the mobile station 400.

[Step S213] (Radio Link Setup Confirm) The radio base station 300 sets up a radio link for packet communication with the mobile station 400 and informs the RNC 200 of completion of the link setup.

[Step S214] (RRC Connection Setup) The RNC 200 informs the mobile station 400 of establishment of an RRC connection.

[Step S215] (DCH Layer-1 Synchronize) The mobile station 400 and radio base station 300 synchronize their dedicated channels in layer 1 (physical layer).

[Step S216] (RRC Connection Setup Complete) The mobile station 400 informs the RNC 200 that it has confirmed the RRC connection establishment.

[Step S217] (Initial Direct Transfer) The mobile station 400 informs the RNC 200 that it starts transmission of a control signal for setting up a logical transmission channel.

[Step S218] (SCCP Establish) The RNC 200 and packet switch 100 establish a Signaling Connection Control Part (SCCP) connection according to the SCCP protocol, so as to exchange their control information such as authentication concealment data.

[Step S219] (Service Request) The RNC 200 requests the packet switch 100 to set up a logical transmission channel.

[Step S220] (Authenticate and Conceal) The mobile station 400 and packet switch 100 authenticate each other. Also, the mobile station 400 and RNC 200 start encryption processing so as to ensure the confidentiality and integrity of their communication data.

[Step S221] (Authentication Concealment Data Request) The radio base station 300 requests the RNC 200 to provide authentication concealment data for use in its authentication processing and encryption processing.

[Step S222] (Authentication Concealment Data Response) The RNC 200 transmits authentication concealment data back to the radio base station 300.

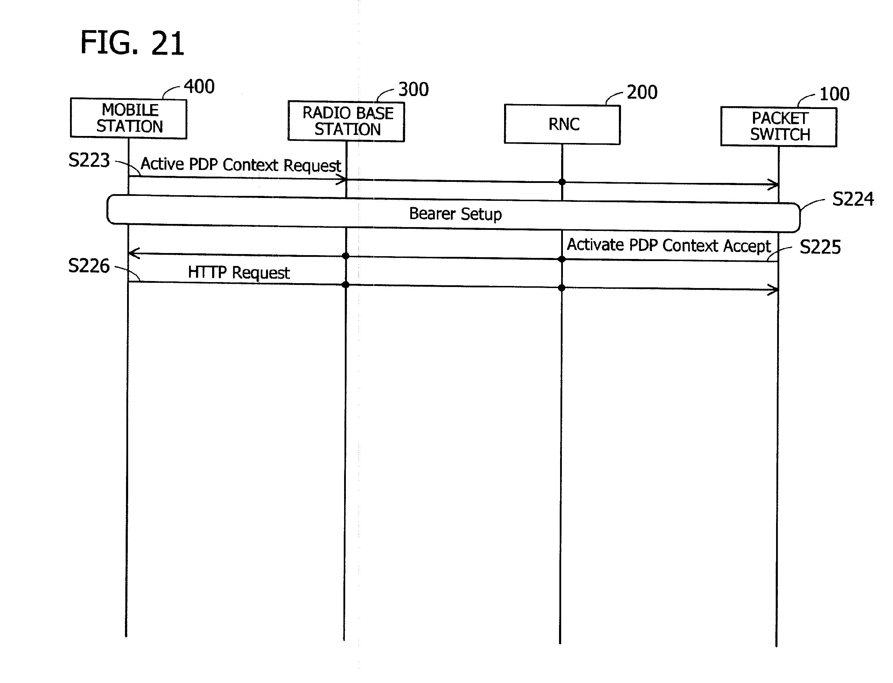

FIG. 21 further illustrates the flow of PDN access according to the second embodiment. The process of FIG. 21 is executed after that of FIG. 20. The following will describe the process of FIG. 21 in accordance with the step numbers.

[Step S223] (Active PDP Context Request) The mobile station 400 sends an activation request for packet communication to the packet switch 100. Here the radio base station 300 intercepts the activation request by using the authentication concealment data obtained at step S222. As the intercepted activation request indicates that its access type is PDN access, the radio base station 300 forwards the activation request to the RNC 200.

[Step S224] (Bearer Setup) The mobile station 400 and packet switch 100 set up a bearer (logical signal transmission channel) for their packet communication.

[Step S225] (Activate PDP Context Accept) The packet switch 100 informs the mobile station 400 that packet communication has been activated.

[Step S226] (HTTP Request) The mobile station 400 transmits an HTTP request to the packet switch 100 by using the established call connection. The packet switch 100 deciphers this HTTP request from the mobile station 400 and sends the resulting HTTP request to the PDN 20.

According to the above steps, the radio base station 300 intercepts access by using authentication concealment data obtained from the RNC 200 after establishment of a connection between the mobile station 400 and core network 10. When it is determined that the access in question is PDN access, the radio base station 300 continues serving packet communication between the mobile station 400 and core network 10.

It is noted that the above step S221 may be modified such that the radio base station 300 requests the RNC 200 to provide minimum information necessary for deciphering. Then at step S222, the RNC 200 only transmits the requested information to the radio base station 300.

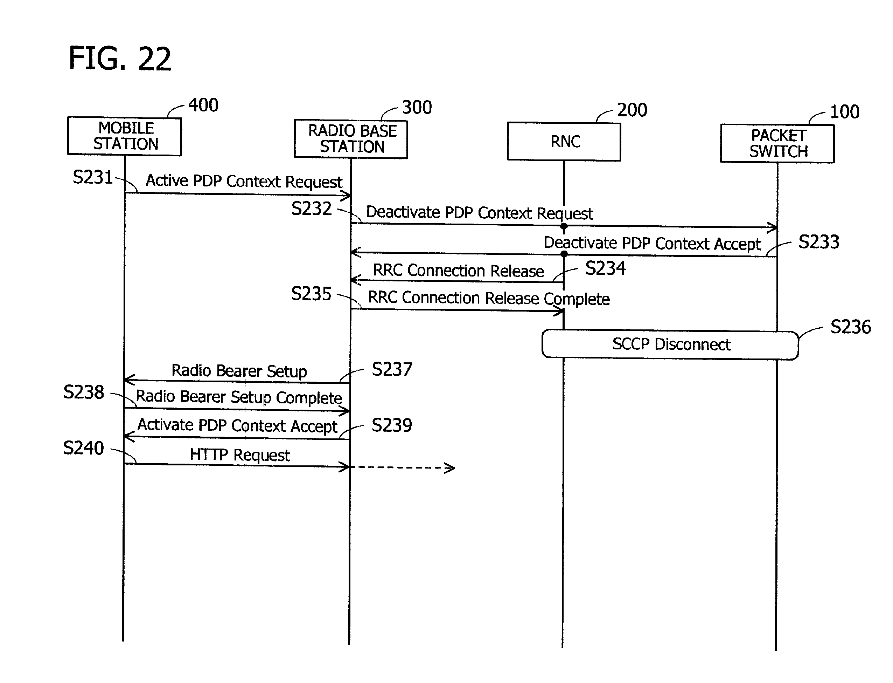

FIG. 22 illustrates a flow of Internet access according to the second embodiment. It is assumed here that a mobile station 400 is attempting access to some content on the Internet 30. The first half of this Internet access is similar to the foregoing PDN access. That is, the process of FIG. 22 is executed after the process of FIG. 20. The following will describe the process of FIG. 22 in accordance with the step numbers.

[Step S231] (Active PDP Context Request) The mobile station 400 sends an activation request for packet communication to the packet switch 100. Here the radio base station 300 intercepts the activation request by using the authentication concealment data obtained at step S222. As the intercepted activation request indicates that its access type is Internet access, the radio base station 300 terminates the activation request, instead of forwarding it to the RNC 200.

[Step S232] (Deactivate PDP Context Request) The radio base station 300 requests the packet switch 100 to deactivate the packet communication.

[Step S233] (Deactivate PDP Context Accept) The packet switch 100 deactivates the packet communication and informs the radio base station 300 of completion of the deactivation.

[Step S234] (RRC Connection Release) The RNC 200 requests the radio base station 300 to release the RRC connection.

[Step S235] (RRC Connection Release Complete) The radio base station 300 releases (disconnects) the RRC connection and informs the RNC 200 of completion of the releasing.

[Step S236] (SCCP Disconnect) The RNC 200 and packet switch 100 disconnect their SCCP connection according to the SCCP protocol.

[Step S237] (Radio Bearer Setup) The radio base station 300 requests the mobile station 400 to set up a bearer (logical signal transmission channel) in the radio section.

[Step S238] (Radio Bearer Setup Complete) The mobile station 400 sets up a radio bearer and informs the radio base station 300 of completion of the setup.

[Step S239] (Activate PDP Context Accept) The radio base station 300 informs the mobile station 400 that packet communication has been activated.

[Step S240] (HTTP Request) The mobile station 400 transmits an HTTP request by using the established call connection. The radio base station 300 deciphers this HTTP request from the mobile station 400 and sends the resulting HTTP request to the Internet 30.

According to the above steps, the radio base station 300 intercepts access by using authentication concealment data obtained from the RNC 200 after establishment of a connection between the mobile station 400 and core network 10. When it is determined that the access in question is Internet access, the radio base station 300 disconnects the connection to the core network 10. The radio base station 300 then terminates subsequent HTTP requests from the mobile station 400 and replaces them with HTTP requests for the Internet 30.

It is noted that the radio base station 300 may be configured to behave differently from the above when the access type is determined to be Internet access. That is, the radio base station 300 may maintain the connection to the core network 10, instead of disconnecting it at the foregoing steps S232 to S236, until the mobile station 400 finishes its Internet access.

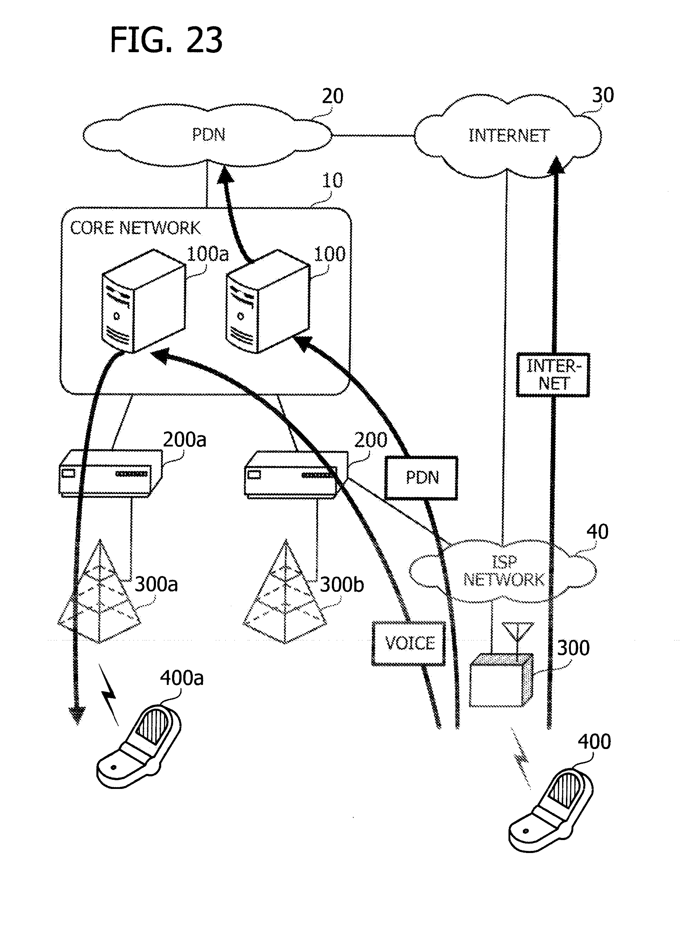

FIG. 23 illustrates access routes according to the second embodiment. As can be seen from FIG. 23, the radio base station 300 forwards voice access or PDN access from a mobile station 400 to the core network 10 of the mobile communications service provider. The radio base station 300, on the other hand, terminates Internet access from the mobile station 400 and outputs it to the Internet 30. PDN access reaching the core network 10 is further forwarded from there to the PDN 20.

In whichever case, the mobile station 400 has only to make access according to the protocols specified by the mobile communications service provider. In other words, it appears to the mobile station 400 that every access makes its way to the core network 10. Actually, however, Internet access is automatically redirected to the Internet 30 by the radio base station 300. These features make it possible to control the flow of packets into the core network 10 more efficiently, without the need for modifying the mobile station 400.

It is further noted that PDN access does not have to go through the Internet 30, thus enabling the mobile communications service provider to ensure at least a certain level of communication quality in such PDN access. This also means that the system can be configured to prevent packets from flowing from the Internet 30 into the PDN 20.

### [Third Embodiment]

A third embodiment will now be described in detail below with reference to the accompanying drawings. The description will focus on its difference from the foregoing first and second embodiments, not repeating explanations for similar features. The third embodiment is designed to give more flexibility to the system by permitting the core network to decide whether to involve itself in the requested packet communication.

The system configuration of the third embodiment is similar to that of the first embodiment discussed in FIG. 2. Radio base stations according to the third embodiment can be realized with the same arrangement of modules as discussed in FIG. 4 for the radio base station 300 according to first embodiment, except that the connection target selection unit 363 applies a different connection control method. The following section will describe the third embodiment, using the same reference numerals used in the first embodiment.

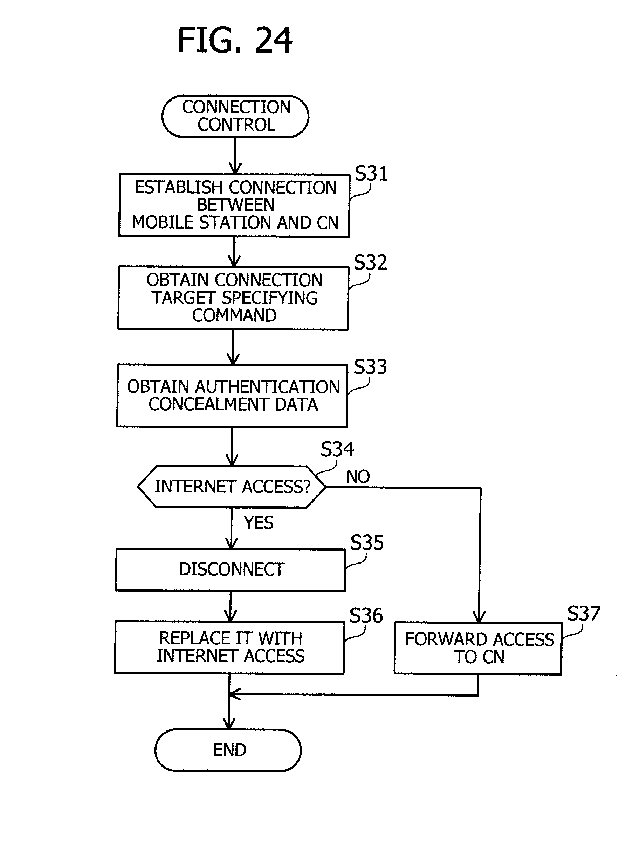

FIG. 24 is a flowchart illustrating a connection control process according to the third embodiment. This process is executed at the radio base station 300. The following will describe the process of FIG. 24 in accordance with the step numbers.

[Step S31] The radio communication unit 330 receives a connection request from a mobile station 400. The connection management unit 340 outputs this connection request to the Iub communication unit 310 on the core network (CN) side. Then the connection management unit 340 relays control signals between the radio communication unit 330 and Iub communication unit 310, thus permitting the mobile station 400 and RNC 200 to establish an RRC connection between them.

[Step S32] The connection target selection unit 363 obtains a connection target specifying command from the RNC 200 via the Iub communication unit 310.

[Step S33] The authentication concealment data collection unit 362 obtains authentication concealment data from the RNC 200 via the Iub communication unit 310.

[Step S34] The connection target selection unit 363 determines whether the connection target specifying command obtained at step S32 specifies connection to the Internet 30. If it specifies connection to the Internet 30, the process advances to step S35. If it specifies connection to the core network 10, the process proceeds to step S37.

[Step S35] The connection management unit 340 disconnects the RRC connection between the RNC 200 and radio base station 300.

[Step S36] The radio communication unit 330 subsequently receives access from the mobile station 400.

The connection management unit 340 outputs this access to the authentication concealment processing unit 350. The authentication concealment processing unit 350 deciphers the access by using the authentication concealment data obtained at step S33, thus replacing it with access to the Internet 30.

[Step S37] The radio communication unit 330 subsequently receives access from the mobile station 400. The connection management unit 340 outputs this access to the Iub communication unit 310 on the core network (CN) side.

According to the above steps, the radio base station 300 obtains a connection target specifying command from the core network 10 after establishment of an RRC connection between the RNC 200 and mobile station 400. When the core network 10 is specified in the obtained command, the radio base station 300 forwards subsequent access from the mobile station 400 to the core network 10. When the Internet 30 is specified in the obtained command, the radio base station 300 terminates subsequent access from the mobile station 400, thus replacing it with access to the Internet 30.

The packet switch 100 may determine the connection target, based on the current state of packet inflow to the core network 10 or subscriber data of the mobile station 400. For example, the packet switch 100 may be configured to select connection to the core network 10 when the packet flow thereinto is at a low level, and to the Internet 30 when the packet flow into the core network 10 is at a high level. Further, the packet switch 100 may be configured to select connection to the core network 10 even if the core network 10 is experiencing a high level of packet inflow, but in the case where the mobile station 400 is a terminal that is subject to a special contract regarding packet communication.

The following section will now describe a flow of messages when a mobile station 400 makes PDN access and Internet access. Note that message flow in the case of voice access is similar to the one discussed in FIG. 13 for the first embodiment.

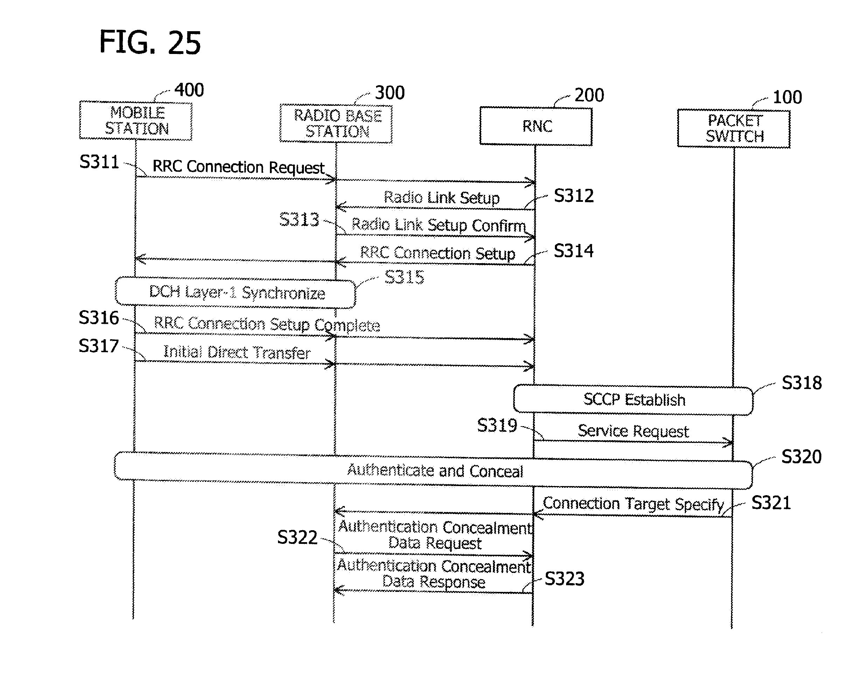

FIG. 25 illustrates a flow of packet access according to the third embodiment. It is assumed here that a mobile station 400 is attempting access to some content on the PDN 20 or Internet 30. The following will describe the process of FIG. 25 in accordance with the step numbers.

[Step S311] (RRC Connection Request) The mobile station 400 transmits a connection request of RRC layer to the RNC 200. During this course, the radio base station 300 does not intercept the connection request, but simply forwards it to the RNC 200.

[Step S312] (Radio Link Setup) The RNC 200 requests the radio base station 300 to set up a radio link for packet communication with the mobile station 400.

[Step S313] (Radio Link Setup Confirm) The radio base station 300 sets up a radio link for packet communication with the mobile station 400 and informs the RNC 200 of completion of the link setup.

[Step S314] (RRC Connection Setup) The RNC 200 informs the mobile station 400 of establishment of an RRC connection.

[Step S315] (DCH Layer-1 Synchronize) The mobile station 400 and radio base station 300 synchronize their dedicated channels in layer 1 (physical layer).

[Step S316] (RRC Connection Setup Complete) The mobile station 400 informs the RNC 200 that it has confirmed the RRC connection establishment.

[Step S317] (Initial Direct Transfer) The mobile station 400 informs the RNC 200 that it starts transmission of a control signal (Service Request) for setting up a logical transmission channel.

[Step S318] (SCCP Establish) The RNC 200 and packet switch 100 establish an SCCP connection according to the SCCP protocol, so as to exchange their control information such as authentication concealment data.

[Step S319] (Service Request) The RNC 200 requests the packet switch 100 to set up a logical transmission channel.

[Step S320] (Authenticate and Conceal) The mobile station 400 and packet switch 100 authenticate each other. Also, the mobile station 400 and RNC 200 start encryption processing so as to ensure the confidentiality and integrity of their communication data.

[Step S321] (Connection Target Specify) The packet switch 100 determines whether to connect the radio base station 300 to the core network 10 or to the Internet 30, based on the situation of packet inflow to the core network 10 or subscriber data of the mobile station 400. The packet switch 100 then specifies the determined connection target to the radio base station 300.

[Step S322] (Authentication Concealment Data Request) The radio base station 300 requests the RNC 200 to provide authentication concealment data for use in its authentication processing and encryption processing.

[Step S323] (Authentication Concealment Data Response) The RNC 200 transmits authentication concealment data back to the radio base station 300.

The system executes afterwards a process similar to the PDN access according to the second embodiment discussed in FIG. 21 in the case where the core network 10 has been specified as the connection target at step S321. On the other hand, in the case where the Internet 30 has been specified as the connection target at step S321, the system executes a process similar to the Internet access according to the second embodiment discussed in FIG. 22. The radio base station 300, however, does not have to intercept the activation request from the mobile station 400.

According to the above steps, the radio base station 300 receives from the core network 10 a command specifying which of the core network 10 and Internet 30 should be its connection target, after establishment of a connection between the mobile station 400 and core network 10. When the core network 10 is specified as the connection target, the radio base station 300 forwards HTTP requests from the mobile station 400 to the core network 10. When the Internet 30 is specified as the connection target, the radio base station 300 terminates HTTP requests from the mobile station 400, thus replacing them with HTTP requests for the Internet 30.

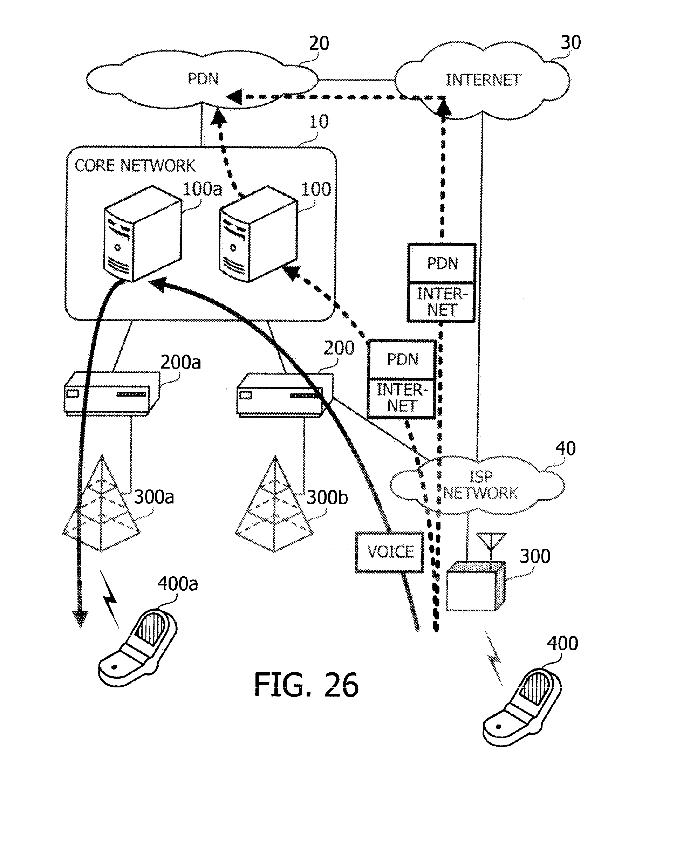

FIG. 26 illustrates access routes according to the third embodiment. As can be seen from FIG. 26, the radio base station 300 forwards voice access from a mobile station 400 to the core network 10 of the mobile communications service provider. On the other hand, when PDN access or Internet access is received from the mobile station 400, the radio base station 300 outputs it to either the core network 10 or the Internet 30 according to a command from the core network 10. PDN access routed to the core network 10 is further forwarded from there to the PDN 20. PDN access routed to the Internet 30 is further forwarded from there to the PDN 20.

In whichever case, the mobile station 400 has only to make access according to the protocols specified by the mobile communications service provider. In other words, it appears to the mobile station 400 that every access makes its way to the core network 10. Actually, however, PDN access and Internet access are redirected to the Internet 30 by the radio base station 300, depending on a command of the core network 10. These features make it possible to control the flow of packets into the core network 10 more efficiently, without the need for modifying the mobile station 400.

Particularly, whether to route packets via the core network 10 can be determined on an individual call connection basis. It is thus possible to control packets flowing into the core network 10 in a flexible way, depending on the current state of packet inflow or the contract of the mobile station 400.

### [Fourth Embodiment]

A fourth embodiment will now be described in detail below with reference to the accompanying drawings. The description will focus on its difference from the foregoing first embodiment, not repeating explanations for similar features.

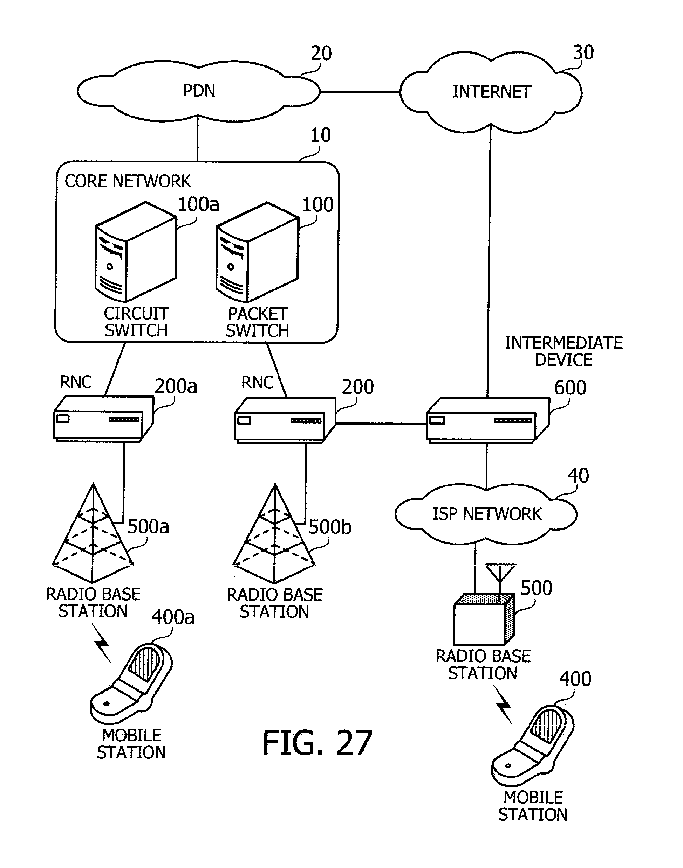

FIG. 27 illustrates a system configuration according to the fourth embodiment. According to the fourth embodiment, this communications system is formed from a core network 10, a PDN 20, the Internet 30, an ISP network 40, a packet switch 100, a circuit switch 100a, RNCs 200 and 200a, mobile stations 400 and 400a, radio base stations 500, 500a, and 500b, and an intermediate device 600.

The core network 10, PDN 20, Internet 30, ISP network 40, packet switch 100, circuit switch 100a, RNCs 200 and 200a, and mobile stations 400 and 400a provide the same functions described in the first embodiment.

The radio base stations 500, 500a, and 500b are different from the radio base stations 300, 300a, and 300b of the first embodiment in that their connection control function functions are eliminated. The radio base station 500 forwards every access from a mobile station 400 to the intermediate device 600.

The intermediate device 600 is an implementation, in the form of a stand-alone network device, of the connection control functions of the radio base station 500, 500a, and 500b discussed in the first embodiment. This intermediate device 600 is linked to the Internet 30, ISP network 40, and RNC 200. The intermediate device 600 receives access from the radio base station 500 via the ISP network 40 and forwards it to the RNC 200. The intermediate device 600 may also terminate such access and replace it with access to the Internet 30.

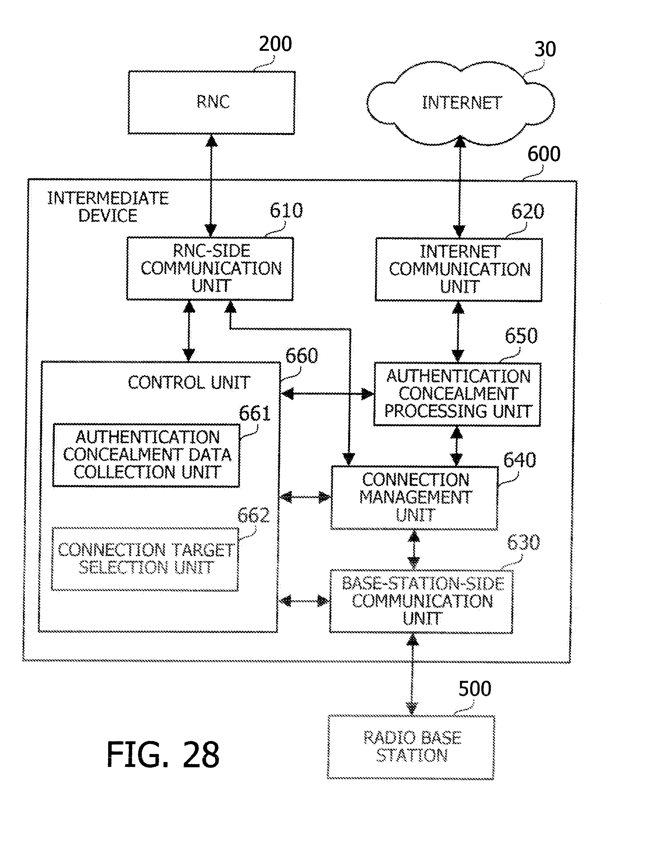

FIG. 28 illustrates functions implemented in an intermediate device according to the fourth embodiment. This intermediate device 600 includes an RNC-side communication unit 610, an Internet communication unit 620, a base-station-side communication unit 630, a connection management unit 640, an authentication concealment processing unit 650, and a control unit 660. Note that the connection management unit 640, authentication concealment processing unit 650, and control unit 660 collectively serve as the communication control unit 4a discussed in FIG. 1.

The RNC-side communication unit 610 communicates with the RNC 200. The Internet communication unit 620 communicates with the Internet 30, while converting, as necessary, the data transmission format between the Internet 30 and mobile communications network. The base-station-side communication unit 630 communicates with the radio base station 500.

The connection management unit 640 examines access that the base-station-side communication unit 630 receives from the mobile station 400, based on commands from the control unit 660, to determine whether to send it to the core network 10 or to the Internet 30. When it is determined to send the access to the core network 10, the connection management unit 640 passes its details to the RNC-side communication unit 610. When it is determined to send the access to the Internet 30, the connection management unit 640 passes its details to the authentication concealment processing unit 650.

The authentication concealment processing unit 650 terminates the access received from the connection management unit 640. More specifically, the authentication concealment processing unit 650 deciphers the access by using authentication concealment data received from the control unit 660. Then the authentication concealment processing unit 650 outputs the resulting PS call access to the Internet communication unit 620.

The control unit 660 controls the overall behavior of the intermediate device 600. The control unit 660 includes an authentication concealment data collection unit 661 and a connection target selection unit 662. The authentication concealment data collection unit 661 requests the RNC 200 to provide authentication concealment data. The authentication concealment data collection unit 661 then supplies the obtained authentication concealment data to the authentication concealment processing unit 650. The connection target selection unit 662 determines whether the call type is CS call or PS call, based on a connection request that the base-station-side communication unit 630 receives from mobile station 400. According to the determined call type, the connection target selection unit 662 specifies to which network the connection management unit 640 is to forward subsequent access from the mobile station 400.

The intermediate device 600 executes control processing similar to the connection control discussed in FIG. 12 for the first embodiment. The following section will now describe a flow of messages when the mobile station 400 initiates a CS call session (voice access) and a PS call session (PDN access and Internet access).

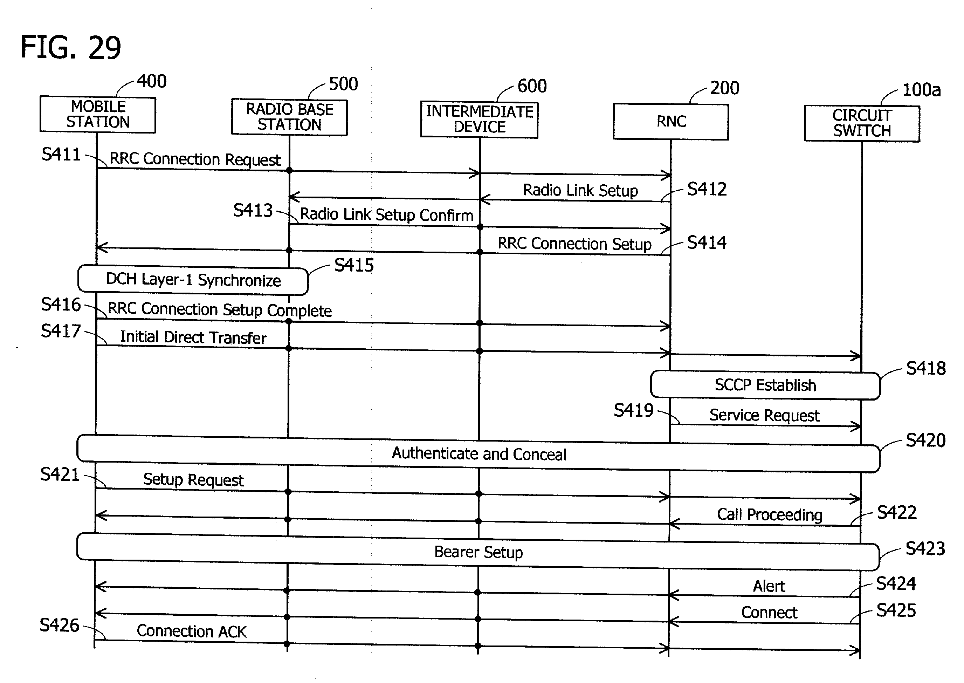

FIG. 29 illustrates a flow of voice access according to the fourth embodiment. It is assumed here that one mobile station 400 makes a voice call to another mobile station 400a. The following will describe the process of FIG. 29 in accordance with the step numbers.

[Step S411] (RRC Connection Request) The mobile station 400 transmits a connection request of RRC layer to the RNC 200. During this course, the intermediate device 600 intercepts the connection request, determines its call type as being CS call, and thus forwards the connection request to the RNC 200.

[Step S412] (Radio Link Setup) The RNC 200 requests the radio base station 500 to set up a radio link for voice communication with the mobile station 400.

[Step S413] (Radio Link Setup Confirm) The radio base station 500 sets up a radio link for voice communication with the mobile station 400 and informs the RNC 200 of completion of the link setup.

[Step S414] (RRC Connection Setup) The RNC 200 informs the mobile station 400 of establishment of an RRC connection.

[Step S415] (DCH Layer-1 Synchronize) The mobile station 400 and radio base station 500 synchronize their dedicated channels in layer 1 (physical layer).

[Step S416] (RRC Connection Setup Complete) The mobile station 400 informs the RNC 200 that it has confirmed the RRC connection establishment.

[Step S417] (Initial Direct Transfer) The mobile station 400 informs the RNC 200 that it starts transmission of a control signal (CM Service Request) for call connection.

[Step S418] (SCCP Establish) The RNC 200 and circuit switch 100a establish an SCCP connection according to the SCCP protocol, so as to exchange their control information such as authentication concealment data.

[Step S419] (CM Service Request) The RNC 200 requests the circuit switch 100a to provide a control signal for call connection.

[Step S420] (Authenticate and Conceal) The mobile station 400 and circuit switch 100a authenticate each other. Also, the mobile station 400 and RNC 200 start encryption processing so as to ensure the confidentiality and integrity of their communication data.

[Step S421] (Setup Request) The mobile station 400 sends a CS call to the circuit switch 100a by using the established RRC connection.

[Step S422] (Call Proceeding) The circuit switch 100a informs the mobile station 400 of acceptance of the CS call.

[Step S423] (Bearer Setup) The mobile station 400 and circuit switch 100a set up a bearer (logical signal transmission channel) for their voice communication.

[Step S424] (Alert) The circuit switch 100a informs the mobile station 400 that it has started paging the callee mobile station 400a.

[Step S425] (Connect) The circuit switch 100a informs the mobile station 400 that the callee mobile station 400a has accepted the CS call (i.e., has responded to the page).

[Step S426] (Connection ACK) The mobile station 400 informs the circuit switch 100a that it has confirmed the establishment of a call connection.

According to the above steps, the intermediate device 600 intercepts a connection request from the mobile station 400 to determine its call type. If the call type is found to be CS call, the intermediate device 600 relays subsequent voice access from the mobile station 400 to the core network 10. At that time, however, the intermediate device 600 does not have to intercept the access data.

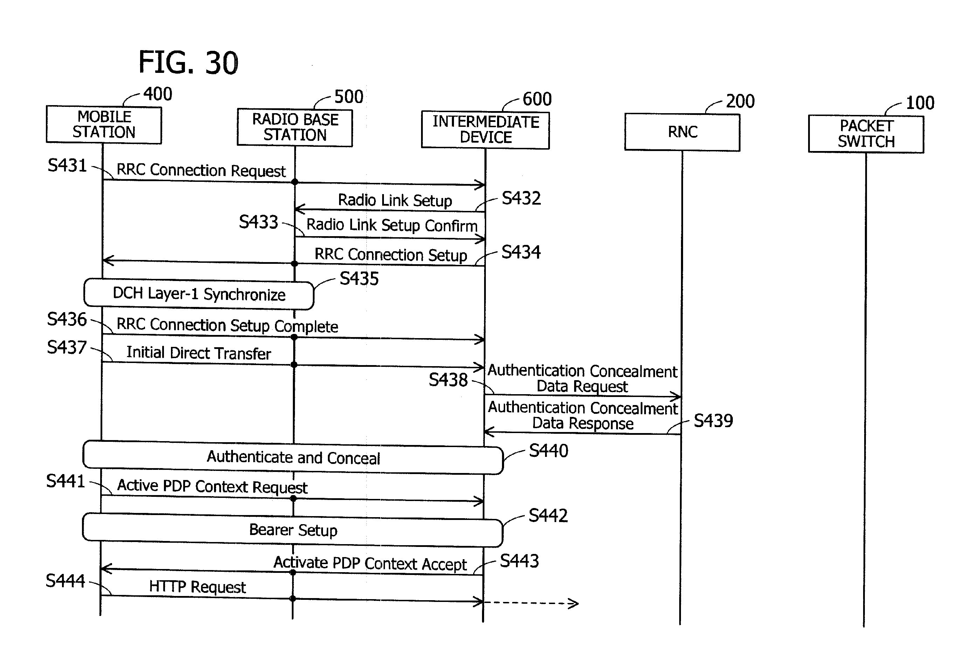

FIG. 30 illustrates a flow of packet access according to the fourth embodiment. It is assumed here that a mobile station 400 is attempting access to some content on the PDN 20 or Internet 30. The following will describe the process of FIG. 30 in accordance with the step numbers.

[Step S431] (RRC Connection Request) The mobile station 400 transmits a connection request of RRC layer to the RNC 200. During this course, the intermediate device 600 intercepts the connection request, determines its call type as being PS call, and thus terminates the connection request, instead of forwarding it to the RNC 200.

[Step S432] (Radio Link Setup) The intermediate device 600 requests the radio base station 500 to set up a radio link for packet communication with the mobile station 400.

[Step S433] (Radio Link Setup Confirm) The radio base station 500 sets up a radio link for packet communication with the mobile station 400 and informs the intermediate device 600 of completion of the link setup.

[Step S434] (RRC Connection Setup) The intermediate device 600 informs the mobile station 400 of establishment of an RRC connection.

[Step S435] (DCH Layer-1 Synchronize) The mobile station 400 and radio base station 300 synchronize their dedicated channels in layer 1 (physical layer).

[Step S436] (RRC Connection Setup Complete) The mobile station 400 informs the RNC 200 that it has confirmed the RRC connection establishment. The intermediate device 600, however, terminates this message, instead of forwarding it to the RNC 200.

[Step S437] (Initial Direct Transfer) The mobile station 400 informs the RNC 200 that it starts transmission of a control signal (Service Request) for setting up a logical transmission channel. The intermediate device 600, however, terminates this message, instead of forwarding it to the RNC 200.

[Step S438] (Authentication Concealment Data Request) The intermediate device 600 requests the RNC 200 to provide authentication concealment data for use in its authentication processing and encryption processing.

[Step S439] (Authentication Concealment Data Response) The RNC 200 transmits authentication concealment data back to the intermediate device 600. It is noted that the RNC 200 may not have valid authentication concealment data at hand for the mobile station 400. In that case, the RNC 200 consults the core network 10 to obtain the relevant authentication concealment data.

[Step S440] (Authenticate and Conceal) The mobile station 400 and intermediate device 600 authenticate each other by using the authentication concealment data obtained at step S439. Also, the mobile station 400 and intermediate device 600 start encryption processing so as to ensure the confidentiality and integrity of their communication data.

[Step S441] (Activate PDP Context Request) The mobile station 400 sends an activation request for packet communication to the packet switch 100. The intermediate device 600, however, terminates this message, instead of forwarding it to the RNC 200.

[Step S442] (Bearer Setup) The mobile station 400 and intermediate device 600 set up a bearer (logical signal transmission channel) for their packet communication.

[Step S443] (Activate PDP Context Accept) The intermediate device 600 informs the mobile station 400 that packet communication has been activated.

[Step S444] (HTTP Request) The mobile station 400 transmits an HTTP request by using the established call connection. The intermediate device 600 deciphers this HTTP request from the mobile station 400 and sends the resulting HTTP request to the Internet 30.

According to the above steps, the intermediate device 600 intercepts a connection request from the mobile station 400 to determine its call type. If the call type is found to be PS call, the intermediate device 600 obtains authentication concealment data from the RNC 200 and executes authentication concealment processing with the mobile station 400, taking the place of the RNC 200. Then the intermediate device 600 terminates subsequent HTTP requests from the mobile station 400, thus replacing them with HTTP requests for the Internet 30.

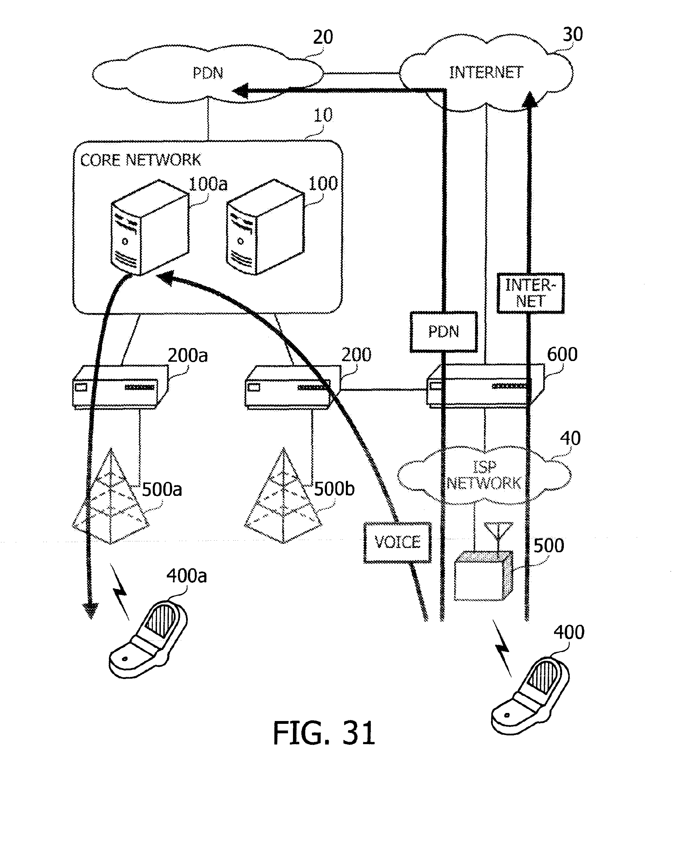

FIG. 31 illustrates access routes according to the fourth embodiment. As can be seen from FIG. 31, the intermediate device 600 forwards voice access from a mobile station 400 to the core network 10 of the mobile communications service provider. The intermediate device 600, on the other hand, terminates PDN access and Internet access from the mobile station 400 and outputs them to the Internet 30. PDN access is further forwarded from the Internet 30 to the PDN 20.

In whichever case, the mobile station 400 and radio base station 500 have only to make access according to the protocols specified by the mobile communications service provider. In other words, it appears to the mobile station 400 and radio base station 500 that every access makes its way to the core network 10. Actually, however, PDN access and Internet access (PS call access) are automatically redirected to the Internet 30 by the intermediate device 600. These features make it possible to control the flow of packets into the core network 10 more efficiently, without the need for modifying the mobile station 400 or radio base station 500.

### [Fifth Embodiment]

A fifth embodiment will now be described in detail below with reference to the accompanying drawings. The description will focus on its difference from the foregoing second and fourth embodiments, not repeating explanations for similar features. The fifth embodiment is configured to route PDN access to PDN via the core network, while allowing Internet access to reach the Internet without passing through the core network.

The system configuration of the fifth embodiment is similar to that of the fourth embodiment discussed in FIG. 27. Intermediate devices according to the fifth embodiment can be realized with the same arrangement of modules as discussed in FIG. 28 for the intermediate device 600 according to fourth embodiment, except that the connection target selection unit 662 applies a different connection control method. The following section will describe the fifth embodiment, using the same reference numerals used in the fourth embodiment.

The intermediate device 600 executes control processing similar to the connection control discussed in FIG. 19 for the second embodiment. The following section will now describe a flow of messages when a mobile station 400 makes PDN access and Internet access. Note that message flow in the case of voice access is similar to the one discussed in FIG. 29 for the fourth embodiment.

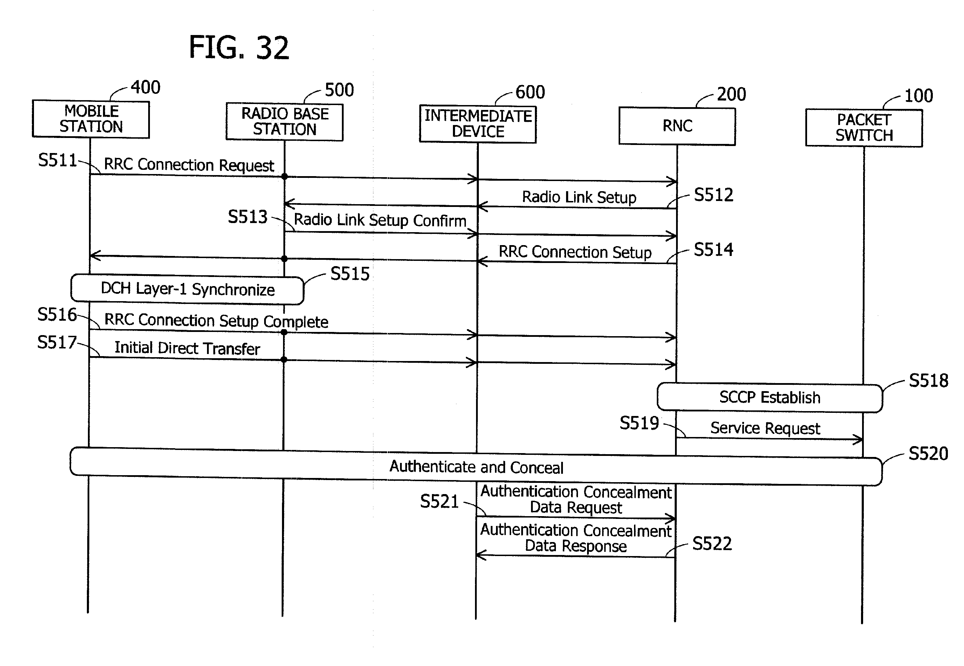

FIG. 32 illustrates a flow of PDN access according to the fifth embodiment. It is assumed here that a mobile station 400 is attempting access to some content on the PDN 20. The following will describe the process of FIG. 32 in accordance with the step numbers.

[Step S511] (RRC Connection Request) The mobile station 400 transmits a connection request of RRC layer to the RNC 200. During this course, the intermediate device 600 does not intercept the connection request, but simply forwards it to the RNC 200.

[Step S512] (Radio Link Setup) The RNC 200 requests the radio base station 500 to set up a radio link for packet communication with the mobile station 400.

[Step S513] (Radio Link Setup Confirm) The radio base station 500 sets up a radio link for packet communication with the mobile station 400 and informs the RNC 200 of completion of the link setup.

[Step S514] (RRC Connection Setup) The RNC 200 informs the mobile station 400 of establishment of an RRC connection.

[Step S515] (DCH Layer-1 Synchronize) The mobile station 400 and radio base station 500 synchronize their dedicated channels in layer 1 (physical layer).

[Step S516] (RRC Connection Setup Complete) The mobile station 400 informs the RNC 200 that it has confirmed the RRC connection establishment.

[Step S517] (Initial Direct Transfer) The mobile station 400 informs the RNC 200 that it starts transmission of a control signal (Service Request) for setting up a logical transmission channel.

[Step S518] (SCCP Establish) The RNC 200 and packet switch 100 establish an SCCP connection according to the SCCP protocol, so as to exchange their control information such as authentication concealment data.

[Step S519] (Service Request) The RNC 200 requests the packet switch 100 to set up a logical transmission channel.

[Step S520] (Authenticate and Conceal) The mobile station 400 and packet switch 100 authenticate each other. Also, the mobile station 400 and RNC 200 start encryption processing so as to ensure the confidentiality and integrity of their communication data.

[Step S521] (Authentication Concealment Data Request) The intermediate device 600 requests the RNC 200 to provide authentication concealment data for use in its authentication processing and encryption processing.

[Step S522] (Authentication Concealment Data Response) The RNC 200 transmits authentication concealment data back to the intermediate device 600.

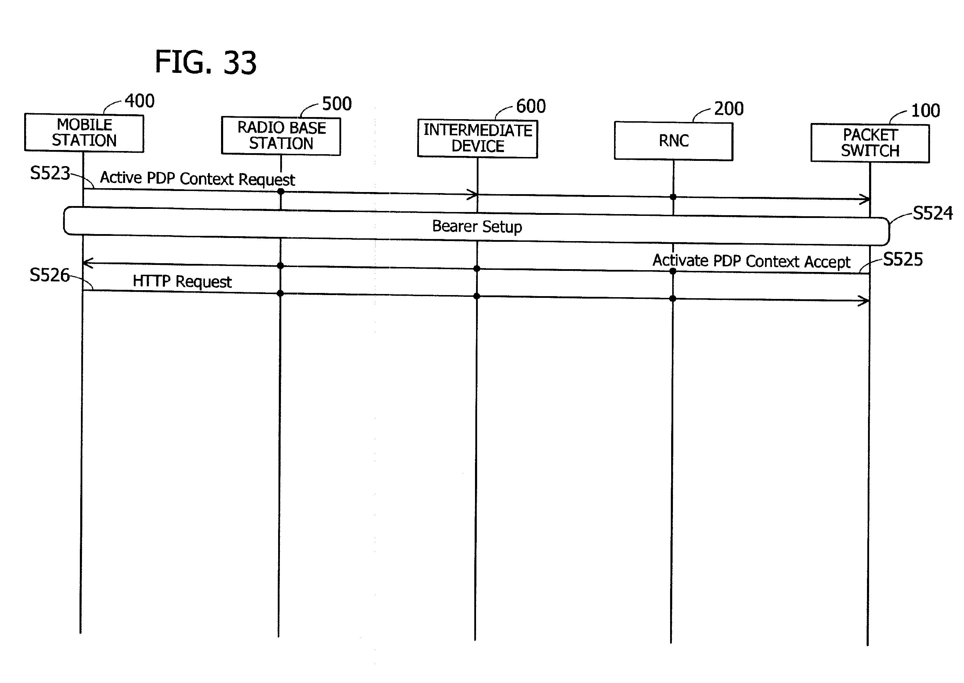

FIG. 33 further illustrates the flow of PDN access according to the fifth embodiment. The process of FIG. 33 is executed after that of FIG. 32. The following will describe the process of FIG. 33 in accordance with the step numbers.

[Step S523] (Activate PDP Context Request) The mobile station 400 sends an activation request for packet communication to the packet switch 100. Here the intermediate device 600 intercepts the activation request by using the authentication concealment data obtained at step S522. As the intercepted activation request indicates that its access type is PDN access, the intermediate device 600 forwards the activation request to the RNC 200.

[Step S524] (Bearer Setup) The mobile station 400 and packet switch 100 set up a bearer (logical signal transmission channel) for their packet communication.

[Step S525] (Activate PDP Context Accept) The packet switch 100 informs the mobile station 400 that packet communication has been activated.

[Step S526] (HTTP Request) The mobile station 400 transmits an HTTP request to the packet switch 100 by using the established call connection. The packet switch 100 deciphers this HTTP request from the mobile station 400 and sends the resulting HTTP request to the PDN 20.

According to the above steps, the intermediate device 600 intercepts access by using authentication concealment data obtained from the RNC 200 after establishment of a connection between the mobile station 400 and core network 10. When it is determined that the access in question is PDN access, the intermediate device 600 continues serving packet communication between the mobile station 400 and core network 10.

Note that the above step S521 may be modified such that the intermediate device 600 requests the RNC 200 to provide minimum information necessary for deciphering. Then at step S522, the RNC 200 only transmits the requested information to the intermediate device 600.

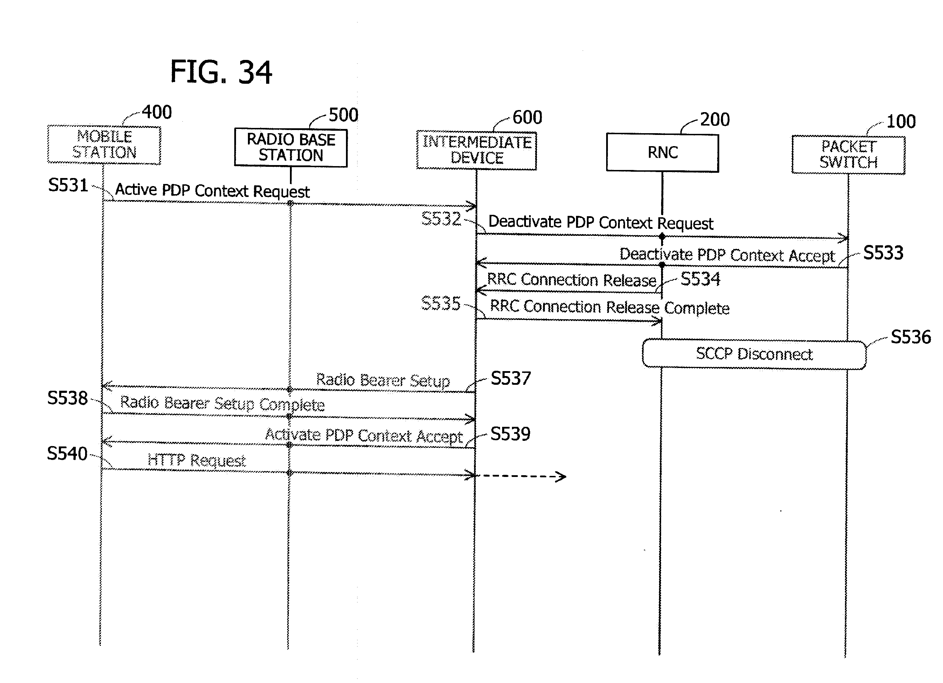

FIG. 34 illustrates a flow of Internet access according to the fifth embodiment. It is assumed here that a mobile station 400 is attempting access to some content on the Internet 30. The first half of this Internet access is similar to the foregoing PDN access. That is, the process of FIG. 34 is executed after the process of FIG. 32. The following will describe the process of FIG. 34 in accordance with the step numbers.

[Step S531] (Activate PDP Context Request) The mobile station 400 sends an activation request for packet communication to the packet switch 100. Here the intermediate device 600 intercepts the activation request by using the authentication concealment data obtained at step S522. As the intercepted activation request indicates that its access type is Internet access, the intermediate device 600 terminates the activation request, instead of forwarding it to the RNC 200.

[Step S532] (Deactivate PDP Context Request) The intermediate device 600 requests the packet switch 100 to deactivate the packet communication.

[Step S533] (Deactivate PDP Context Accept) The packet switch 100 deactivates the packet communication and informs the intermediate device 600 of completion of the deactivation.

[Step S534] (RRC Connection Release) The RNC 200 requests the intermediate device 600 to release the RRC connection.

[Step S535] (RRC Connection Release Complete) The intermediate device 600 releases (disconnects) the RRC connection and informs the RNC 200 of completion of the releasing.

[Step S536] (SCCP Disconnect) The RNC 200 and packet switch 100 disconnect their SCCP connection according to the SCCP protocol.

[Step S537] (Radio Bearer Setup) The intermediate device 600 requests the mobile station 400 to set up a bearer (logical signal transmission channel) in the radio section.

[Step S538] (Radio Bearer Setup Complete) The mobile station 400 sets up a radio bearer and informs the RNC 200 of completion of the setup. The intermediate device 600, however, terminates this message, instead of forwarding it to the RNC 200.

[Step S539] (Activate PDP Context Accept) The intermediate device 600 informs the mobile station 400 that packet communication has been activated.

[Step S540] (HTTP Request) The mobile station 400 transmits an HTTP request by using the established call connection. The intermediate device 600 deciphers this HTTP request from the mobile station 400 and sends the resulting HTTP request to the Internet 30.

According to the above steps, the intermediate device 600 intercepts access by using authentication concealment data obtained from the RNC 200 after establishment of a connection between the mobile station 400 and core network 10. When it is determined that the access in question is Internet access, the intermediate device 600 disconnects the connection to the core network 10. The intermediate device 600 then terminates subsequent HTTP requests from the mobile station 400, thus replacing them with HTTP requests for the Internet 30.

Note that the intermediate device 600 may be configured to behave differently from the above when the access type is determined to be Internet access. That is, the radio base station 300 may maintain the connection to the core network 10, instead of disconnecting it at the foregoing steps S532 to S536, until the mobile station 400 finishes its Internet access.

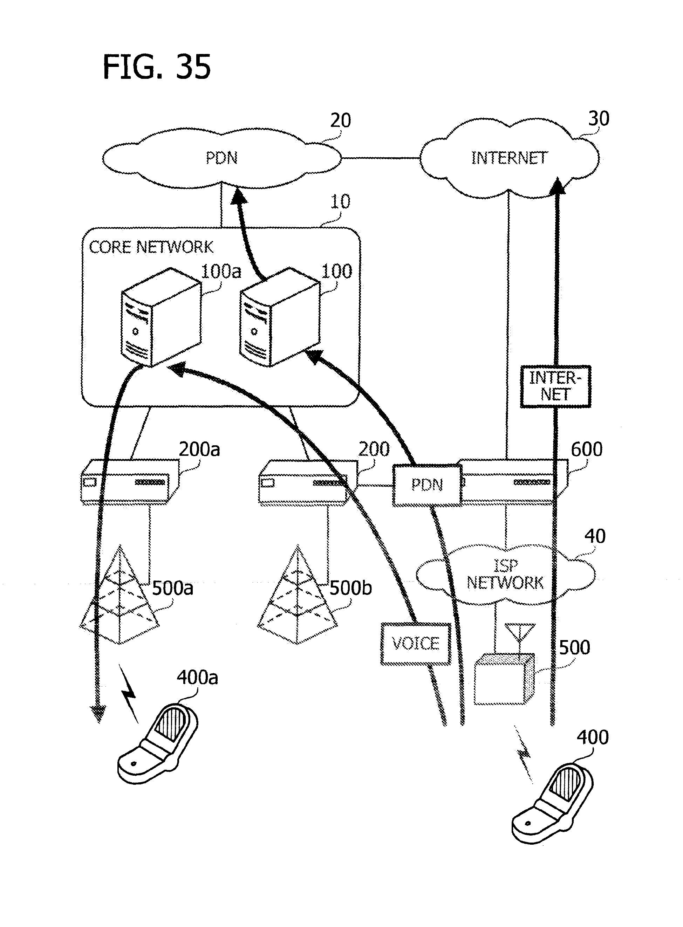

FIG. 35 illustrates access routes according to the fifth embodiment. As can be seen from FIG. 35, the intermediate device 600 forwards voice access or PDN access from a mobile station 400 to the core network 10 of the mobile communications service provider. The intermediate device 600, on the other hand, terminates Internet access from the mobile station 400 and outputs it to the Internet 30. PDN access is further forwarded from the core network 10 to the PDN 20.

In whichever case, the mobile station 400 and radio base station 500 have only to make access according to the protocols specified by the mobile communications service provider. In other words, it appears to the mobile station 400 and radio base station 500 that every access makes its way to the core network 10. Actually, however, Internet access is automatically redirected to the Internet 30 by the intermediate device 600. These features make it possible to control the flow of packets into the core network 10 more efficiently, without the need for modifying the mobile station 400.

It is further noted that PDN access does not have to go through the Internet 30, thus enabling the mobile communications service provider to ensure at least a certain level of communication quality in such PDN access. This also means that the system can be configured to prevent packets from flowing from the Internet 30 into the PDN 20.

### [Sixth Embodiment]

A sixth embodiment will now be described in detail below with reference to the accompanying drawings. The description will focus on its difference from the foregoing third, fourth, and fifth embodiments, not repeating explanations for similar features. The sixth embodiment is designed to give more flexibility to the system by permitting the core network to decide whether to involve itself in the requested packet communication.

The system configuration of the sixth embodiment is similar to that of the fourth embodiment discussed in FIG. 27. Intermediate devices according to the sixth embodiment can be realized with the same arrangement of modules as discussed in FIG. 28 for the intermediate device 600 according to fourth embodiment, except that the connection target selection unit 662 applies a different connection control method. The following section will describe the sixth embodiment, using the same reference numerals used in the fourth embodiment.

The intermediate device 600 executes control processing similar to the connection control discussed in FIG. 24 for the third embodiment. The following section will now describe a flow of messages when a mobile station 400 makes PDN access and Internet access. Note that message flow in the case of voice access is similar to the one discussed in FIG. 29 for the fourth embodiment.

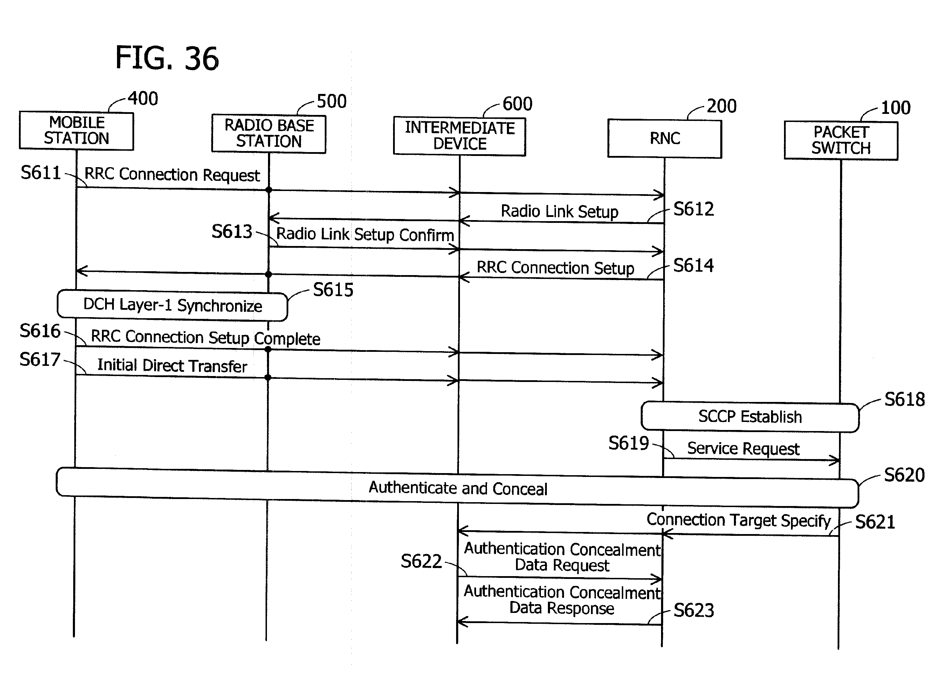

FIG. 36 illustrates a flow of packet access according to the sixth embodiment. It is assumed here that a mobile station 400 is attempting access to some content on the PDN 20 or Internet 30. The following will describe the process of FIG. 36 in accordance with the step numbers.

[Step S611] (RRC Connection Request) The mobile station 400 transmits a connection request of RRC layer to the RNC 200. During this course, the intermediate device 600 does not intercept the connection request, but simply forwards it to the RNC 200.

[Step S612] (Radio Link Setup) The RNC 200 requests the radio base station 500 to set up a radio link for packet communication with the mobile station 400.

[Step S613] (Radio Link Setup Confirm) The radio base station 500 sets up a radio link for packet communication with the mobile station 400 and informs the RNC 200 of completion of the link setup.

[Step S614] (RRC Connection Setup) The RNC 200 informs the mobile station 400 of establishment of an RRC connection.

[Step S615] (DCH Layer-1 Synchronize) The mobile station 400 and radio base station 500 synchronize their dedicated channels in layer 1 (physical layer).

[Step S616] (RRC Connection Setup Complete) The mobile station 400 informs the RNC 200 that it has confirmed the RRC connection establishment.

[Step S617] (Initial Direct Transfer) The mobile station 400 informs the RNC 200 that it starts transmission of a control signal (Service Request) for setting up a logical transmission channel.

[Step S618] (SCCP Establish) The RNC 200 and packet switch 100 establish an SCCP connection according to the SCCP protocol, so as to exchange their control information such as authentication concealment data.

[Step S619] (Service Request) The RNC 200 requests the packet switch 100 to set up a logical transmission channel.

[Step S620] (Authenticate and Conceal) The mobile station 400 and packet switch 100 authenticate each other. Also, the mobile station 400 and RNC 200 start encryption processing so as to ensure the confidentiality and integrity of their communication data.

[Step S621] (Connection Target Specify) The packet switch 100 determines whether to connect the intermediate device 600 to the PDN 20 or to the Internet 30, based on the situation of packet inflow to the core network 10 or subscriber data of the mobile station 400. The packet switch 100 then specifies the determined connection target to the intermediate device 600.

[Step S622] (Authentication Concealment Data Request) The intermediate device 600 requests the RNC 200 to provide authentication concealment data for use in its authentication processing and encryption processing.

[Step S623] (Authentication Concealment Data Response) The RNC 200 transmits authentication concealment data back to the intermediate device 600.

The system executes afterwards a process similar to the PDN access of the fifth embodiment discussed in FIG. 33 in the case where the PDN 20 has been specified as the connection target at step S621. On the other hand, in the case where the Internet 30 has been specified as the connection target at step S621, the system executes a process similar to the Internet access of the fifth embodiment discussed in FIG. 34. It is not necessary, however, for the intermediate device 600 to intercept the activation request from the mobile station 400.

According to the above steps, the intermediate device 600 receives from the core network 10 a command specifying which of the PDN 20 and Internet 30 should be its connection target, after establishment of a connection between the mobile station 400 and core network 10. When the PDN 20 is specified as the connection target, the intermediate device 600 forwards HTTP requests from the mobile station 400 to the core network 10. When the Internet 30 is specified as the connection target, the intermediate device 600 terminates HTTP requests from the mobile station 400, thus replacing them with HTTP requests for the Internet 30.

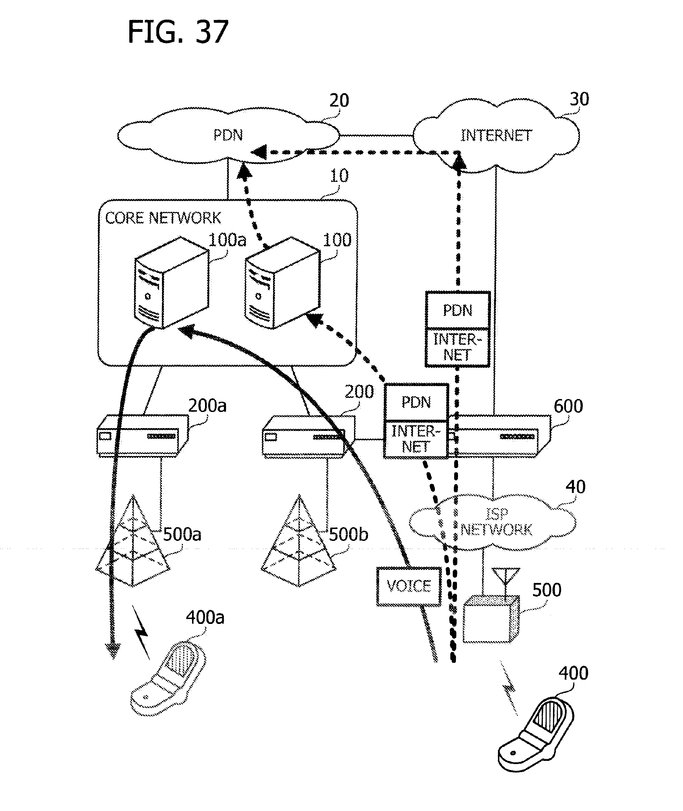

FIG. 37 illustrates access routes according to the sixth embodiment. As can be seen from FIG. 37, the intermediate device 600 forwards voice access from a mobile station 400 to the core network 10 of the mobile communications service provider. On the other hand, when PDN access or Internet access is received from the mobile station 400, the intermediate device 600 outputs it to either the core network 10 or the Internet 30 according to a command from the core network 10. PDN access routed to the core network 10 is further forwarded from there to the PDN 20. PDN access routed to the Internet 30 is further forwarded from there to the PDN 20.

In whichever case, the mobile station 400 and radio base station 500 have only to make access according to the protocols specified by the mobile communications service provider. In other words, it appears to the mobile station 400 and radio base station 500 that every access makes its way to the core network 10. Actually, however, PDN access and Internet access are redirected to the Internet 30 by the intermediate device 600, depending on a command of the core network 10. These features make it possible to control the flow of packets into the core network 10 more efficiently, without the need for modifying the mobile station 400 or radio base station 500.

Particularly, whether to route packets via the core network 10 can be determined on an individual call connection basis. It is thus possible to control packets flowing into the core network 10 in a flexible way, depending on the current state of packet inflow or the contract of the mobile station 400.

While the above first to third embodiments have assumed that the proposed connection control is implemented in a small radio base station linked to the ISP network, it may also be possible for normal radio base stations constituting macrocells to perform the same control. While the above first to sixth embodiments have assumed the use of the Internet as an external communications network that is linked to the mobile communications network and can support packet communication, other kind of network such as a private local area network (LAN) may also serve the purpose.

Further, the above first to sixth embodiments have discussed voice communication as an example of CS call sessions, as well as HTTP communication as an example of PS call sessions, the embodiments should not be limited to those specific types of communication. Specifically, the PS call sessions may include File Transfer Protocol (FTP) and other various types of communication, as well as the communication performed for their preparation, such as establishing a connection over transmission paths using the Transmission Control Protocol (TCP) /Internet Protocol (IP).

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

- 1:: mobile communications network
- 2:: data communications network
- 3:: mobile station
- 4:: communication apparatus
- 4a:: communication control unit

## Claims

1. A communication apparatus capable of connecting to a mobile communications network which performs both circuit switching and packet switching, as well as to a data communications network which performs packet switching, the communication apparatus comprising:
a communication control unit configured to obtain access from a mobile station to the mobile communications network, terminate the access whose call type is packet-switched call, and replace that access with access to the data communications network.

2. The communication apparatus according to claim 1, wherein the communication control unit watches access after establishment of a connection between the mobile station and mobile communications network, and when the access is a packet-switched call for a predetermined service, disconnects the connection between the mobile station and mobile communications network and terminates subsequent access.

3. The communication apparatus according to claim 2, wherein the communication control unit obtains encryption processing data from the mobile communications network and deciphers the access by using the encryption processing data.

4. The communication apparatus according to claim 1, wherein the communication control unit determines the call type based on a connection request from the mobile station to the mobile communications network, and terminates the connection request and subsequent access when the call type is determined to be packet-switched call.

5. The communication apparatus according to claim 1, wherein the communication control unit disconnects a connection established between the mobile station and mobile communications network and terminates subsequent access, upon receipt of a command from the mobile communications network which requests use of the data communications network for packet-switched calls, after the establishment of the connection between the mobile station and mobile communications network.

6. The communication apparatus according to claim 1, wherein the communication control unit establishes a connection between the mobile station and mobile communications network by sending a connection request to the mobile communications network and sending an additional connection request to the mobile station, in response to a paging event from the mobile communications network to the mobile station during access to the data communications network.

7. The communication apparatus according to claim 1, wherein the communication control unit obtains encryption processing data from the mobile communications network and deciphers access by using the encryption processing data.

8. A radio base station capable of connecting to a mobile communications network that performs both circuit switching and packet switching, as well as to a data communications network which performs packet switching, the radio base station comprising:
a communication control unit configured to obtain access from a mobile station to the mobile communications network, terminate the access whose call type is packet-switched call, and replace that access with access to the data communications network.

9. An intermediate device capable of connecting to a mobile communications network that performs both circuit switching and packet switching, as well as to a data communications network which performs packet switching, the intermediate device being located on a communication path from a radio base station to the mobile communications network, the intermediate device comprising:
a communication control unit configured to obtain access from a mobile station to the mobile communications network, terminate the access whose call type is packet-switched call, and replace that access with access to the data communications network.

10. A communication method for use by a communication apparatus capable of connecting to a mobile communications network that performs both circuit switching and packet switching, as well as to a data communications network which performs packet switching, the communication method comprising:
obtaining access from a mobile station to the mobile communications network, terminating the access whose call type is packet-switched call, and replacing that access with access to the data communications network.
